# EUROPEAN PATENT APPLICATION

(11) **EP 1 852 457 A1**
(43) Date of publication of application: **07.11.2007**
(21) Application number: 06714833.8
(22) Date of filing: 28.02.2006
(51) Int. Cl.: C08G 85/00, C08G 63/88

(54) **PROCESS FOR PRODUCING THERMOPLASTIC-POLYMER SOLUTION**

(30) Priority: 01.03.2005 JP 2005055258; 01.03.2005 JP 2005055262; 01.03.2005 JP 2005055263
(71) Applicant: Asahi Kasei Chemicals Corporation, Tokyo 100-8440 (JP)
(72) Inventor: YOKOYAMA, Hiroshi, 0 (JP); AMINAKA, Muneaki, 0 (JP)
(74) Representative: Bradley, Josephine Mary
(86) International application number: PCT/JP2006/303696
(87) International publication number: WO 2006/093122

(57) **Abstract**

An object of the present invention is to provide a method of producing a solution of a thermoplastic polymer such as a polyester resin and/or a solution of a depolymerization product of a thermoplastic polymer by efficiently dissolving the thermoplastic polymer and/or the depolymerization product of the thermoplastic polymer. The method of producing a solution of a thermoplastic polymer and/or a solution of a depolymerization product of a thermoplastic polymer, which includes supplying a thermoplastic polymer, in a melted state, from a raw material supply port to an interior of a reactor, discharging the polymer through holes of a perforated plate, and then bringing the polymer into contact with a solvent vapor while flowing down along the surface of a support disposed inside the reactor.

## Description

### TECHNICAL FIELD

The present invention relates to a method of producing a solution of a thermoplastic polymer and/or a solution of a deplymerization product of a thermoplastic polymer providing a raw material for paints, polymer powders and the like. Furthermore, the present invention also relates to a method of cleaning any polymer, polymerization intermediate, or modified products thereof left within a melt polymerization reactor that is used for producing a polycondensation polymer by supplying a polymerization intermediate, in a melted state, from a raw material supply port to the interior of the melt polymerization reactor, and the intermediate is then discharged through the holes of polymerization intermediate through the holes of a perforated plate, and then producing the polycondensation polymer while the polymerization intermediate flows down the surface of the support disposed inside the reactor.

The present application is claimed priority to the Japanese patent application No. 2005-055258 filed on March 1, 2005, Japanese patent application No. 2005-055262 filed on March 1, 2005, and the Japanese patent application No. 2005-055263 filed on March 1, 2005, and the content of which is herein incorporated.

### BACKGROUND ART

Thermoplastic polymers typified by polyester resins such as polyethylene terephthalate (hereafter abbreviated as PET) feature superior levels of heat resistance and mechanical properties.
In recent years, polyester resins have also begun to attract attention as environmentally friendly materials that are capable of being recycled, and these resins are now widely used as fibers, magnetic tapes, packaging films, sheets, injection molded products for all manner of applications, preforms for the production of drink containers, and so forth.
Furthermore, solutions of thermoplastic polymers and/or solutions of depolymerization products of thermoplastic polymers obtained by dissolving a thermoplastic polymer and/or a depolymerization product of a thermoplastic polymer in a solvent can be used as paints, adhesives, coating agents, and binders and the like. Moreover, using polyester as an example, a water-dispersed composition obtained by dissolving the polyester in an organic solvent, mixing and dispersing this solution within water, and then removing the organic solvent can also be used as a coating agent, and a polyester powder can be produced by dispersing the polyester solution within an appropriate poor solvent to precipitate the polyester, and then collecting and drying the thus obtained powder.

Examples of methods of dissolving a thermoplastic resin such as a polyester in a solvent include methods in which the solid-state polymer is shredded coarsely or processed into pellets before being dissolved in the solvent, and methods in which the melted polymer is added directly to the solvent, and is then stirred to effect dissolution. However, methods in which a solid-state polymer is dissolved tend to suffer from inadequate dissolution rates, even if the solvent is heated to improve the dissolution rate, meaning the time required for the dissolution process is overly long. Furthermore, methods in which a melted polymer is dissolved in the solvent tend to suffer different problems, including aggregation of the melted polymer within the solvent, which results in a slower dissolution rate, and solidification and accumulation of those portions of the polymer that exhibit poor fluidity during stirring within the solvent, which causes a deterioration in the solubility.

In order to resolve the drawbacks outlined above, patent document 1 discloses a method of producing a saturated copolyester resin solution that involves dissolving the saturated copolyester resin in a solvent, either by circulating the solution mixture during the stirring process, at such a rate that the quantity of circulated material relative to the total quantity of the solution mixture is at least 0.3/hour, or by blowing an inert gas through the solution mixture during the stirring process at a rate of at least 0.1/hour relative to the total quantity of the solution mixture.
However, as with earlier methods, the dissolution rate for this method is not particularly high, meaning the method is not particularly efficient.

Furthermore, because they are used in large quantities in wide variety of applications as described above, thermoplastic polymers, and particularly polycondensation polymers typified by PET, are responsible for the generation of large quantities of used polymer. The demand for used drink bottles generated is particularly significant, and the processing of these bottles poses a considerable social problem. Accordingly, much research is being conducted into the development of technologies for reusing used polymers.

A number of methods have been proposed for reusing PET resins.
In one such method, the impurities are first carefully removed from collected and sorted waste PET bottles, and a multitude of steps are then conducted to convert the PET to either pellet or flake form, which is then recycled for use as a fiber raw material. Other methods involve chemical recycling of the PET resin.

Of the PET bottle chemical recycling methods that have been developed to date, the vast majority employ solvolysis, including hydrolysis methods that use water as the solvent and result in decomposition of the PET resin into terephthalic acid (hereafter abbreviated as TPA) and ethylene glycol (hereafter abbreviated as EG), and methods that use alcohols as the solvent and yield EG via alcoholysis.

Furthermore, methods of converting polyester waste products to monomers, and then collecting and reusing these monomers as the raw materials for further polymerization reactions to produce more polyester have also been proposed. Fundamentally, these methods enable the recycling of compounds with no loss, thereby enabling the reuse of resources.
Using polyethylene terephthalate resin as an example of the polyester resin, examples of methods of recycling the monomers obtained by the depolymerization of the polyethylene terephthalate resin are disclosed in patent documents 2 through 5 listed below.

The patent document 2 discloses a method of depolymerizing polyethylene terephthalate, wherein an extruder and a reactor provided at the exit of the extruder are used during a process of heating, melting, and depolymerizing the polyethylene terephthalate, and in addition to conducting the heating, melting, and depolymerization reaction of the polyethylene terephthalate, a glycol is introduced to the system at a point beyond the exit of the extruder, and this glycol and the polyethylene terephthalate are mixed together in a mixer provided between the extruder and the reactor.

The patent document 3 discloses a method of producing a polyester wherein terephthalic acid obtained by the hydrolysis of recycled dimethyl terephthalate, which in turn is obtained by the methanol depolymerization of a polyalkylene terephthalate, is used for at least 70% by weight of the total acid component that constitutes the polyester, and a precipitate obtained by heating this terephthalic acid in a glycol using a specific catalyst is then subjected to a polycondensation reaction.

The patent document 4 discloses a method of recycling polyester waste that includes successively the steps of (a) grinding and pretreating the polyester waste, (b) subjecting the treated polyester waste from the step (a) to a depolymerization with alkylene glycol in the presence of a catalyst, (c) subjecting the depolymerization product obtained in the step (b) to a transesterification reaction with methanol in the presence of a catalyst, thus yielding a crude dimethyl terephthalate, (d) recrystallizing the crude dimethyl terephthalate obtained in the step (c) and then conducting further purification by methanol washing and/or distillation, thus enabling recovery of a high-purity dimethyl terephthalate, and (e) reacting the purified dimethyl terephthalate obtained in the step (d) with a 2-fold or greater large molar excess of an alkylene glycol, under normal pressure and with no catalyst, thereby enabling recovery of a low polymer mixture composed mainly of bis-β-hydroxyalkylene terephthalate and containing hydroxyalkylene ester groups at the terminals to enable recovery of a low polymer mixture composed mainly of bis-β-hydroxyalkylene terephthalate and containing hydroxyalkylene ester groups at the terminals.

The patent document 5 discloses a method of producing a high-purity polyethylene terephthalate polymer that includes a pretreatment step of obtaining crude polyethylene terephthalate flakes from used polyethylene terephthalate waste by conducting a series of pretreatments such as grinding, washing, and foreign matter separation, a depolymerization step of subjecting the obtained crude polyethylene terephthalate flakes to a depolymerization in the presence of a catalyst by adding an excess of purified and/or crude ethylene glycol, thus yielding crude bis-β-hydroxyethyl terephthalate (BHET), a BHET purification step of removing foreign matter other than the polyethylene terephthalate resin from the binary mixture solution containing the obtained crude BHET and the crude ethylene glycol, thus yielding purified bis-β-hydroxyethyl terephthalate (BHET), and a step of conducting a melt polycondensation using the purified BHET as a raw material.

In the depolymerization reaction described above, increasing the reaction rate while reducing the quantity of depolymerization catalyst used is important from the perspectives of both cost and reaction efficiency, but none of the patent documents described above proposes a method or reactor that enables the depolymerization reaction to be conducted efficiently and at low cost.

On the other hand, the various polycondensation polymers described above and typified by PET are also widely used in preforms for producing drink containers. These drink containers not only require the properties described above, but must also have no effect on the taste of the contents of the container. As a result, high-quality polycondensation polymers with a high polymerization degree, no coloring, and minimal quantities of impurities such as acetaldehyde are required.

Moreover in recent years, in addition to the trend towards higher quality, the trend towards greater diversity in polymer applications has resulted in tests being conducted on overcoming certain drawbacks and improving polymer properties by conducting copolymerization with different monomers and blending improvers into the polymer in order to satisfy the demands for higher levels of performance.
For example, in the case of PET containers, methods have been disclosed in which the crystallization rate can be increased, enabling high cycle molding and efficient crystallization of the bung portion of the molded bottle, by blending either a poly(ethylene terephthalate - ethylene terephthalamide) copolymer (see patent document 6) or a polyolefin (see patent document 7) into the PET. A method has also been disclosed for improving the transparency, moldability, and heat and pressure resistance of PET by conducting melt kneading with polyethylene naphthalate (see patent document 8).

However, when improvers are melt kneaded into a polycondensation polymer, thermal decomposition of the polymer usually occurs, meaning a reduction in the molecular weight, and a deterioration in the polymer quality, such as the coloring and the level of accumulation of decomposition products, are unavoidable. Methods in which the improvers are added directly to the reaction system used for producing the polycondensation polymer, thereby removing the need for a melt kneading process, are conceivable, but in most cases, the improver undergoes thermal degradation at the polymerization temperature of the polycondensation polymer, meaning the polymer quality, including the coloring and the level of accumulation of decomposition products, is actually inferior to that of the original polymer undergoing improvement. Even in methods in which another monomer is included in the copolymerization, because the melting point and thermal decomposition temperature vary from monomer to monomer, other components with low levels of heat resistance also undergo thermal degradation under the polymerization conditions, causing the molecular weight to be reduced and the polymer quality such as the coloring and the level of accumulation of decomposition products to be inferior to that of the original polymer undergoing improvement.
In these tests in which certain properties of the polymer are improved by the copolymerization of different monomers or the blending of improvers, the quality of the product polymer is significantly inferior to that of the original polymer, meaning significant improvements in the production technology are required.

As a result of intensive research aimed at resolving the problems described above, the inventors of the present invention developed a polymerization method based on a novel principle, wherein in a method of producing a polycondensation polymer, a polymerization intermediate, in a melted state, is supplied from a raw material supply port to the polymerization reactor, is discharged through the holes of a perforated plate, and then undergoes polymerization under reduced pressure, while flowing down along the surface of a support, and the inventors discovered that this method enabled melt polymerization to be conducted at a significantly lower temperature than that attainable using conventional polymerization methods (see Japanese Patent Application No. 2004-345246 and Japanese Patent Application No. 2004-345241).
The most preferred polymerization reactor used in the polymerization method of the present invention has a structure which includes no stirring device, and in which a plurality of narrow diameter wire-like support are disposed inside the polymerization reactor. However, after polymerization has been conducted using this polymerization reactor, when the operation is halted, the inside of the polymerization reactor is prone to the retention of residual polymerization intermediates, raw materials, and modified products thereof.

A method of cleaning a conventional stirred tank-type polymerization reactor, wherein the inside of the polymerization reactor is filled with glycols, and the glycols are then heated to a temperature close to its boiling point while being stirred, thereby depolymerizing and removing any residual polymers and the like has already been disclosed (see patent document 9). However, if an attempt is made to apply this type of method to this polymerization reactor of the present invention described above, there was a problem of requiring very long time for carrying out depolymerization of the residual polymer, not only is a large quantity of residual polymer and the like retained on the support inside the polymerization reactor, but because the reactor is also not provided with a stirring device,

Patent document 1: Japanese Patent Application Laid-Open No. 2001-261843
Patent document 2: Japanese Patent Application Laid-Open No. 2004-196880
Patent document 3: Japanese Patent Application Laid-Open No. 2003-160656
Patent document 4: Japanese Patent Application Laid-Open No. 2002-060543
Patent document 5: Japanese Patent Application Laid-Open No. 2000-169623
Patent document 6: Japanese Patent Application Laid-Open No. 2003-327812
Patent document 7: Japanese Patent Application Laid-Open No. 2004-263195
Patent document 8: Japanese Patent Application Laid-Open No. 2000-017162
Patent document 9: Japanese Patent Application Laid-Open No. 5-295392

### DISCLOSURE OF THE INVENTION

### PROBLEMS TO BE SOLVED BY THE INVENTION

An object of the present invention is to provide a method of producing a solution of a thermoplastic polymer such as a polyester resin and/or a solution of a depolymerization product of a thermoplastic polymer by efficiently dissolving the thermoplastic polymer and/or the depolymerization product of a thermoplastic polymer.

Furthermore, another object of the present invention is to provide a recycling method that reuses, as a polymer raw material, a compound obtained by the aforementioned method of producing a solution of a thermoplastic polymer and/or a solution of a depolymerization product of a thermoplastic polymer.

Furthermore, another object of the present invention is to provide a method of cleaning a melt polymerization reactor capable of low cost production by melt polymerization of various high quality polycondensation polymers, and molded products thereof, having a high polymerization degree, free from coloring, and having a low content of impurities generated by thermal decomposition, wherein when the polymerization operation is halted, the polymer, polymerization intermediate and raw materials and modified products thereof left within the melt polymerization reactor are removed for the next melt polymerization.

### MEANS FOR SOLVING THE PROBLEMS

As a result of intensive research aimed at achieving the objects described above, the inventors of the present invention discovered that by supplying the thermoplastic polymer, in a melted state, from a raw material supply port to an appratus, discharging the thermoplastic polymer through the holes of a perforated plate, and then causing the polymer to make contact with a solvent vapor while allowing the polymer to flow down along a support a thermoplastic polymer and/or depolymerization product of the thermoplastic polymer could be dissolved quickly and efficiently within the solvent, thereby accomplishing the present invention.

Furthermore, the inventors of the present invention also discovered that in depolymerization a thermoplastic polymers, particularly polycondensation polymers, efficient depolymerization not heretofore attainable by conventional methods is made possible by adopting a structure that the polycondensation polymer is supplied, in a melted state, from a raw material supply port to a melting reactor that also functions as a depolymerization reactor, and the polymer is then discharged through the holes of a perforated plate, and subsequently depolymerized through contact with the vapor of a molecular weight reducing agent, while allowing the polymer to flow down along the surface of support disposed inside the reactor.

Moreover, the inventors of the present invention also discovered that in a melt polymerization reactor in which a polymerization intermediate is supplied, in a melted state, from a raw material supply port to the melt polymerization reactor, and the intermediate is then discharged through the holes of a perforated plate and subsequently polymerized under reduced pressure while flowing down along the surface of support, by reacting any residual polymer, polymerization intermediates, raw materials, or modified products thereof left within the melt polymerization reactor with a molecular weight reducing agent, these residual materials could be efficiently removed.

In other words, the present invention provides the aspects described below.
(1) A method of producing a solution of a thermoplastic polymer and/or a solution of a depolymerization product of a thermoplastic polymer, characterised by comprising supplying a thermoplastic polymer, in a melted state, from a raw material supply port to the interior of an reactor, discharging the thermoplastic polymer through the holes of a perforated plate, and then causing the polymer to make contact with a solvent vapor while allowing the polymer to flow down along the surface of a support disposed inside the reactor.
(2) The method of producing a solution of a thermoplastic polymer and/or a solution of a depolymerization product of a thermoplastic polymer according to aspect (1), characterized in that a relationship S1/S2 > 1 is satisfied where S1 is a surface area of the thermoplastic polymer flowing down along the support and S2 is a contact surface area between the support and the thermoplastic polymer.
(3) The method of producing a solution of a thermoplastic polymer and/or a solution of a depolymerization product of a thermoplastic polymer according to aspect (1) or (2), characterized in that a distance that the thermoplastic polymer flows down along the support in a solvent vapor phase is 0.5 m or more.
(4)The method of producing a solution of a thermoplastic polymer and/or a solution of a depolymerization product of a thermoplastic polymer according to any one of aspects (1) through (3), characterized in that the thermoplastic polymer includes one or more polymers selected from the group consisting of polyester resins, polyamide resins, polycarbonate resins, polyolefin resins, polystyrene resins, acrylic-based resins, silicone-based resins, fluororesins, polyphenylene oxides, polyphenylene sulfides, polysulfones, cellulose-based resins, and chitosan-based resins.
(5)The method of producing a solution of a depolymerization product of a thermoplastic polymer according to any one of aspects (1) through (4), characterized in that at least one component contained within the solvent vapor functions as a molecular weight reducing agent for the thermoplastic polymer, and the thermoplastic polymer undergoes a depolymerization reaction while flowing down the support.
(6)The method of producing a solution of a depolymerization product of a thermoplastic polymer according to aspect (5), characterized in that the solvent vapor contains an alkylene glycol.
(7)The method of recycling a thermoplastic polymer,characterized in that a compound obtained using a method of producing a solution of a thermoplastic polymer and/or a solution of a depolymerization product of a thermoplastic polymer according to any one of aspects (1) through (6) is reused as a polymer raw material.
(8)The method of cleaning a polymerization reactor in which a polymerization intermediate is supplied, in a melted state, from a raw material supply port to a melt polymerization reactor, and is then discharged through the holes of a perforated plate and subsequently polymerized to produce a polycondensation polymer while flowing down along the surface of support disposed inside the reactor, characterized in that residual polymers, polymerization intermediates, and modified products thereof left within the polymerization reactor are removed by being brought into contact with a solvent vapor while flowing down along the surface of the support.
(9)The method of cleaning a polymerization reactor according to aspect (8), characterized in that a relationship S1/S2 > 1 is satisfied where S1 is a surface area of the polycondensation polymer flowing down along the support and S2 is a contact surface area between the support and the polycondensation polymer.
(10)The method of cleaning a polymerization reactor according to aspect (8) or (9), characterized in that following production of the polycondensation polymer, the solvent vapor is introduced into the reactor with the temperature inside the polymerization reactor maintained at a temperature equal to, or higher than, the temperature at which the polycondensation polymer undergoes crystallization.
(11) The method of cleaning a polymerization reactor according to any one of aspects (8) through (10), characterized in that a distance across which the residual polymers, polymerization intermediates, and modified products thereof left within the polymerization reactor flowing down along the support during contacting with the solvent vapor while flowing down along the surface of the support is at least 0.5 m.
(12) The method of cleaning a polymerization reactor according to any one of aspects (8) through (11), wherein at least one component contained within the solvent vapor functions as a molecular weight reducing agent for the residual polymers, polymerization intermediates, and modified products thereof left within the polymerization reactor, and these residues undergo a depolymerization reaction while flowing down along the support.
(13)The method of cleaning a polymerization reactor according to any one of aspects (8) through (12), wherein the solvent vapor includes an alkylene glycol that has been heated to a temperature within a range from 100 to 300°C.

### Advantages of the Invention

A method of producing a solution of a thermoplastic polymer and/or a solution of a depolymerization product of a thermoplastic polymer, a method of depolymerizing a polycondensation polymer, and a method of cleaning a polymerization reactor for a polycondensation polymer according to the present invention exhibit the effects described below.
(1) By distributing the thermoplastic polymer using a perforated plate, a large quantity of polymer can be treated efficiently and evenly. Because the polymer is retained on the support, the surface area of the surface layer can be increased, thereby facilitating the contact between the polymer and the solvent vapor, and ensuring a more efficient dissolution process. Furthermore, because the polymers retained on each of the support does not merge to form aggregates, no deterioration occurs in the efficiency of the treatment process.
(2) By causing the thermoplastic polymer to fall down the surface of the support under the effects of gravity, dissolved and/or depolymerized polymers, which exhibit a lower viscosity, fall more rapidly, enabling the quantity of polymer treated to be increased. Furthermore, the solution of polymers and the like dissolved first within the surface layer falls down over the surface of polymer positioned closer to the interior, which has not yet dissolved (swollen) adequately and exhibits a comparatively higher viscosity, and consequently the interior polymer is stretched by the application of a shearing force, thereby ensuring a more efficient dissolution and/or depolymerization.
(3) By contacting with a solvent vapor, a large quantity of polymer can be readily dissolved using a small quantity of solvent, enabling the production of a solution with any desired viscosity from low viscosity through to high viscosity. By using at least one component contained within the solvent vapor functions as a molecular weight reducing agent for the thermoplastic polymer, the depolymerization can be conducted more efficiently.
(4)Because the dissolution rate and/or the depolymerization rate can be increased, the dissolution time and/or depolymerization time can be reduced, deterioration in the product properties is few, and the generation of thermal degradation products and contamination caused by these thermal degradation products is also few.

### BRIEF DESCRIPTION OF THE DRAWING

Figure 1 is a schematic illustration showing one example of a dissolver used in the present invention.
Figure 2 is a schematic illustration showing one example of a method of conducting supply to a perforated plate used in the present invention.
Figure 3 is a schematic illustration showing one example of a depolymerization reactor used in the present invention.
Figure 4 is a schematic illustration showing one example of a method of conducting supply to a perforated plate used in the present invention.
Figure 5 is a schematic illustration showing one example of a method of conducting supply to a perforated plate used in the present invention.
Figure 6 is a schematic illustration of an inert gas absorption device and a depolymerization reactor used in the present invention.
Figure 7 is a schematic illustration showing one example of a polymerization reactor used in the present invention.

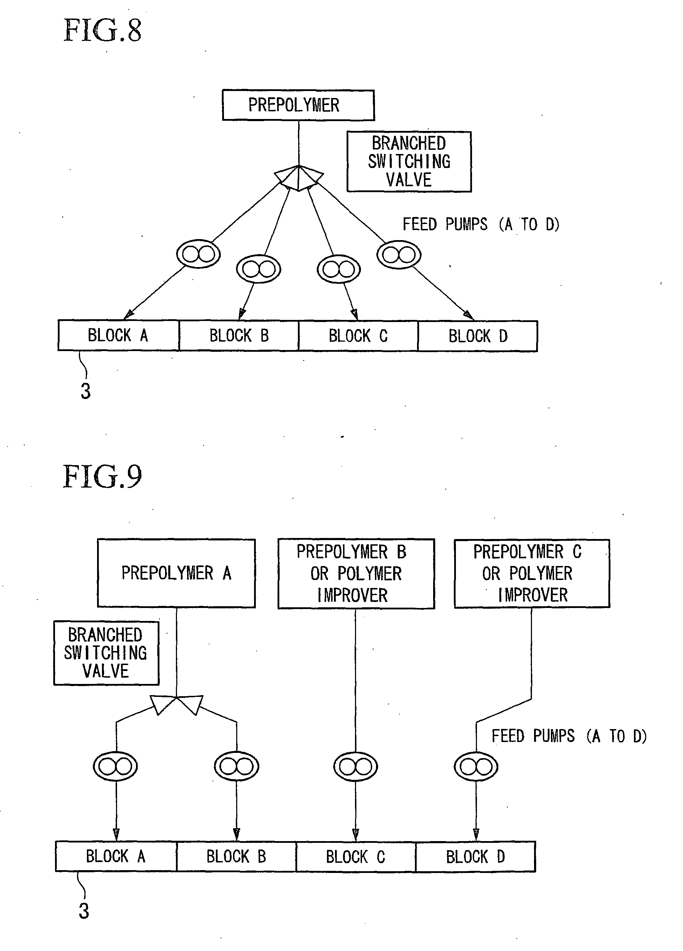

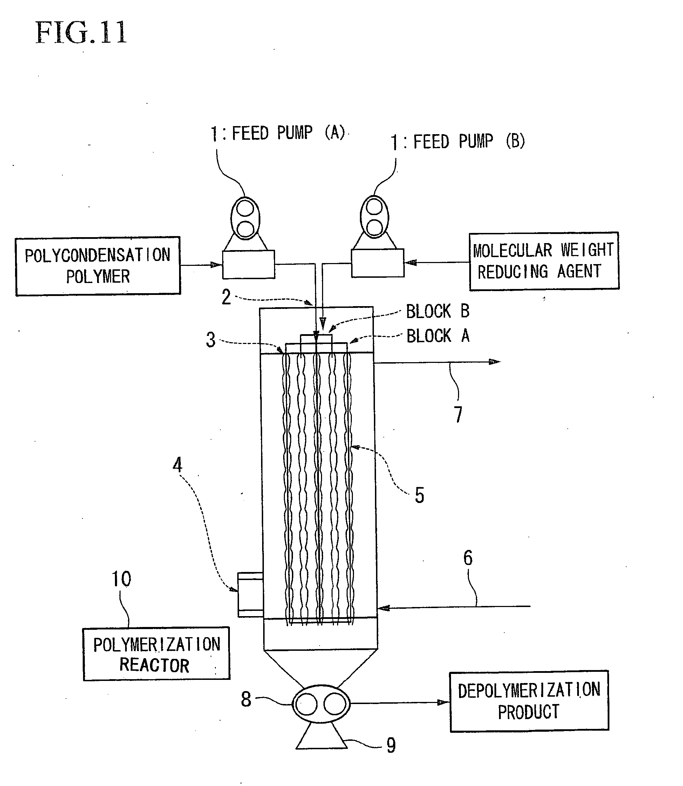

Figure 8 is a schematic illustration showing one example of a method of conducting supply to a perforated plate used in the present invention.
Figure 9 is a schematic illustration showing one example of a method of conducting supply to a perforated plate used in the present invention.

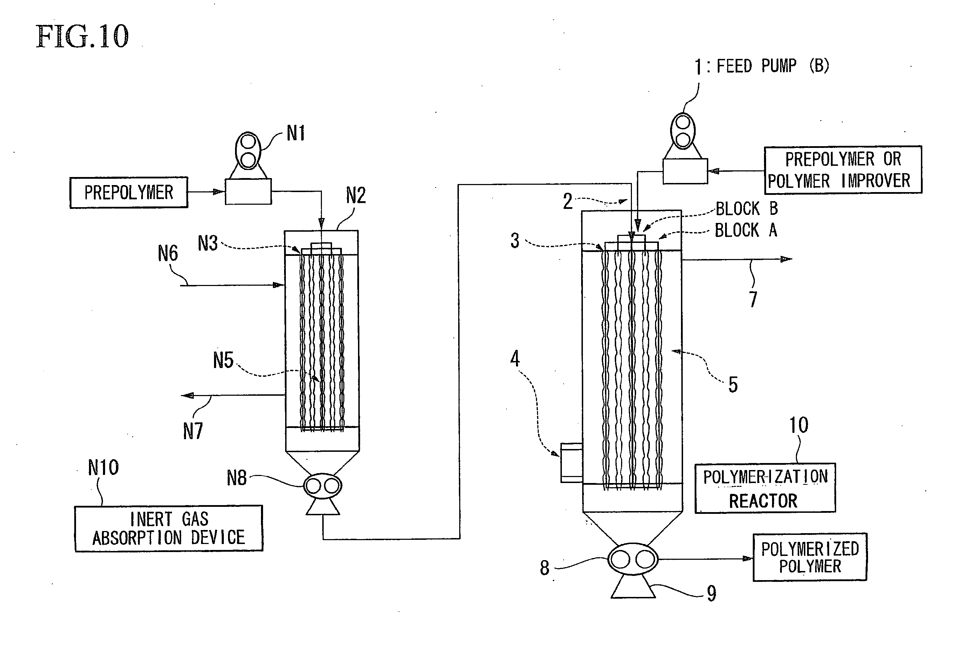

Figure 10 is a schematic illustration of an inert gas absorption device and a polymerization reactor used in the present invention.
Figure 11 is a schematic illustration showing one example of a polymerization reactor and a molding device used in a cleaning method of the present invention.

### DESCRIPTION OF SYMBOLS

- 1: Feed pump
- 2: Raw material supply port
- 3: Perforated plate
- 4: Observation window
- 5: Support and falling polymer
- 6: Inert gas supply port
- 7: Pressure reduction exhaust port
- 8: Drainage pump
- 9: Discharge port
- 10: Dissolver or Depolymerization reactor or Polymerization reactor
- N: 1 Feed pump
- N2: Raw material supply port
- N3: Perforated plate
- N5: Support and falling polymer
- N6: Inert gas supply port
- N7: Pressure reduction exhaust port
- N8: Drainage and feed pump
- N 10: Inert gas absorption device

### BEST MODE FOR CARRYING OUT THE INVENTION

First is a detailed description, for the method of producing a solution of a thermoplastic polymer and/or a solution of a depolymerization product of a thermoplastic polymer according to the present invention, of (A) a dissolution method, a depolymerization method, and a method of cleaning a polymerization reactor, (B) a thermoplastic polymer, (C) a solvent and a molecular weight reducing agent, (D) a dissolver and a dissolution method, (E) a depolymerization reactor and a depolymerization method, and (F) a polymerization reactor suited to a cleaning method of the present invention, and a method of cleaning such a reactor.

### (A) Dissolution Method, Depolymerization Method, and Method of Cleaning a Polymerization Reactor

A dissolution method and/or a depolymerization method according to the present invention is a method of dissolving and/or depolymerizing a thermoplastic polymer that includes the steps of supplying the thermoplastic polymer, in a melted state, from a raw material supply port to a dissolver, discharging the polymer through the holes of a perforated plate, and then causing the polymer to make contact with a solvent vapor and/or the vapor of a molecular weight reducing agent while flowing down along the surface of a support disposed inside the reactor.
By employing this method, the thermoplastic polymer that flows down alomg the support is distributed across each of the support, and while remaining retained by the support, flows down towards the bottom of the reactor (a dissolver, or depolymerization reactor, or polymerization reactor) while undergoing dissolution and/or depolymerization, thereby exhibiting a behavior of rapid movement.

As a result, both the contact surface area between the polymer and the solvent vapor and/or vapor of the molecular weight reducing agent, and the mixing effect produced by the shearing force generated by the falling polymer solution increase dramatically, causing a significant increase in the treatment rate for the dissolution and/or depolymerization.
In the case of the production of a solution of a thermoplastic polymer and/or a solution of a depolymerization product of a thermoplastic polymer, examples of suitable thermoplastic polymers that can be subjected to treatment include the melted resin after the end of polymerization reaction iself or solid-state polymers that have been pelletized or converted to sheet form, or melted recycled raw materials generated by collecting used molded products and then conducting a preliminary washing treatment, if required, prior to melting. Furthermore, in the case of a method of cleaning a polymerization reactor, the treatment target is the residual polycondensation polymer left within the polymerization reactor following polymerization and subsequent halting of the polymerization operation.

On the basis of further research, the inventors discovered that the holes within the perforated plate of the dissolver could be either grouped within a single block, or divided into two or more blocks, so that arbitrary amount and kind of polymer and/or solvent could be supplied simultaneously to each block, at a desired supply rate, thereby effecting dissolution.
As a result, it was found that if the structure and positioning of the support were such that the polymer flows supplied from each block of holes within the perforated plate merged and fell together, then even if a stirring mechanism such as a stirring blade was not provided, the dissolution and/or depolymerization reaction were still accelerated, enabling the production of the polymer solution and/or solution of a depolymerization product of the polymer to be achieved quickly and at low cost.

A polymer solution produced using the present invention may include an improver as well as the polymer that is dissolved in the solvent, and this type of improver can be supplied from a different block from the polymer, discharged from holes within the perforated plate in the same manner as the thermoplastic polymer, and then blended into the polymer solution by dissolution as it flows down the support.
Examples of this type of improver include urethane-based resins, epoxy-based resins, acrylic resins, novolak resins, phenoxy resins, butyral resins, and ketone resins, and these improvers can be used either alone, or in combinations of two or more different materials. Furthermore, if required, a plasticizer such as an epoxidized oil or dioctyl phthalate can also be added. Moreover, other additives including colorants and stabilizers such as molecular weight reducing agents, colored pigments, anti-sagging agents, surface conditioners, cross-linking promoting catalysts, ultraviolet absorbers, photostabilizers, and antioxidants can also be used if required.

The polymer supplied from each of the blocks may, of course, be the same polymer, and by setting the supply rate for each block, the method is able to adapt to variations in the quantity of polymer being treated.
The distance the thermoplastic polymer flows during the period of contact with the solvent vapor while flowing down along the surface of the support is preferably at least 0.5 m. If this fall distance is too short, then the dissolution and/or depolymerization may be inadequate, meaning the polymer can descend and fall from the end of the support in an unmodified high viscosity state, and then combine to form aggregates, thereby dramatically reducing the treatment efficiency. There are no particular restrictions on the fall distance, although in terms of enhancing the treatment efficiency, the distance is preferably within a range from 0.5 to 50 m, even more preferably from 1 to 20 m, and most preferably from 2 to 15 m.

### (B) Thermoplastic Polymer

Specific examples of the thermoplastic polymer used in the present invention include polymers with structures in which aliphatic hydrocarbon groups are bonded together via the bonding of functional groups, such as aliphatic polyesters, aliphatic polyamides, and aliphatic polycarbonates; polymers with structures in which aliphatic hydrocarbon groups and aromatic hydrocarbon groups are bonded together via the bonding of functional groups, such as aliphatic aromatic polyesters, aliphatic aromatic polyamides, and aliphatic aromatic polycarbonates; and polymers with structures in which aromatic hydrocarbon groups are bonded together via the bonding of functional groups, such as aromatic polyesters and aromatic polyamides. Other suitable examples include thermoplastic polymers such as polyolefin resins, polystyrene resins, acrylic resins, silicone-based resins, fluororesins, polyphenylene oxides, polyphenylene sulfides, polysulfones, cellulose-based resins, and chitosan-based resins.

The thermoplastic polymers described above may be either homopolymers or copolymers. Furthermore, copolymers containing different linkages such as ester linkages, amide linkages and carbonate linkages, and copolymers in which different skeletons such as polyolefin skeletons, polystyrene skeletons and polyacrylic acid-based skeletons exist in either random or block-type arrangements are also suitable. Specific examples of these types of copolymers include polyester carbonates and polyesteramides.

### (C) Solvent and Molecular Weight Reducing Agent

The solvent and/or molecular weight reducing agent used in the present invention may be any compound capable of dissolving and/or effecting a depolymerization of the thermoplastic polymer. The molecular weight reducing agent may also function as the solvent. Examples of suitable compounds include one or more organic solvents such as aliphatic, alicyclic and aromatic hydrocarbon compounds, aliphatic ester-based compounds, alcohol-based compounds, ether-based compounds, ketone-based compounds, and halogenated hydrocarbon compounds, as well as water and aqueous solutions produced by mixing an organic compound with water, although this is in no way an exhaustive list. Of the solvents listed above, organic solvents including aliphatic hydrocarbons such as hexane and petroleum ether; alicyclic hydrocarbons such as cyclohexane and cyclohexene; aromatic hydrocarbon compounds such as xylene and toluene; aliphatic ester-based compounds such as ethyl acetate, propyl acetate, and butyl acetate; alcohol-based compounds such as methanol, ethanol, butanol, and ethylene glycol; ether-based compounds such as diethyl ether; ketone-based compounds such as methyl ethyl ketone, diisobutyl ketone, acetone, and cyclohexanone; and mixtures of these organic solvents are preferred.

Of the various possible molecular weight reducing agents, the molecular weight reducing agent used for depolymerization of a polycondensation polymer can be selected from conventional compounds in accordance with the nature of the polycondensation polymer. Suitable examples include either one compound, or mixtures of two or more compounds selected from amongst alkylene glycols such as ethylene glycol, propylene glycol, diethylene glycol, triethylene glycol, tetraethylene glycol, dipropylene glycol, and tripropylene glycol; alcohols of 1 to 30 carbon atoms including methanol, ethanol, propanol, butanol, and benzyl alcohol; and water.

Furthermore, as well as the molecular weight reducing agent, a depolymerization catalyst that includes one or more metal compounds selected from a group consisting of alkali metal carbonates, hydrogen carbonates, hydroxides and alcoholates, such as sodium carbonate, and alkaline earth metal carbonates, hydrogen carbonates, hydroxides and alcoholates, and/or a solvent for dissolving or swelling the polycondensation polymer such as benzene, toluene, xylene, naphthalene, 1-methylnaphthalene, 2-methylnaphthalene, tetralin, isophorone, and N-methyl-2-pyrrolidone may also be added.
The solvent and/or molecular weight reducing agent are supplied into the inside of the reactor (the dissolver, depolymerization reactor, or polymerization reactor) in either a liquid or vapor state, and are brought into contact with the polymer or the like falling down the support in a vapor state.

### (D) Dissolver and Dissolution Method

The term "dissolver" used in the present invention refers to a reactor in which a thermoplastic polymer is supplied, in a melted state, from a raw material supply port to the interior of the dissolver, and the polymer is discharged through the holes of a perforated plate and is then caused to make contact with a solvent vapor while flowing down along the surface of support disposed inside the dissolver.

### (D-1) Perforated Plate

The term "perforated plate" refers to a plate-type body containing a plurality of through holes. By using this perforated plate, polymer drift is suppressed and localized retention within certain sections inside the dissolver is prevented, meaning a polymer solution and/or solution of a depolymerization product of the polymer can be produced at higher and more consistent quality. Furthermore, the perforated plate may include either a single block of holes, or may be divided into two or more blocks, so that arbitrary polymers and/or solvents can be supplied simultaneously to each block at desired supply rates.

In terms of the construction of the perforated plate, there are no particular restrictions on the plate thickness, which is typically within a range from 0.1 to 300 mm, preferably from 1 to 200 mm, and even more preferably from 5 to 150 mm. The perforated plate must have sufficient strength to withstand the pressure from the supply chamber housing the polymer to be dissolved, and in those cases where the support within the dissolution chamber are secured to the perforated plate, must also have sufficient strength to support the weight of the support, and the polymer and formed polymer solution falling down the support, meaning perforated plates that have been reinforced with ribs or the like are one preferred option.

The shape of the holes within the perforated plate are usually suitably selected from shapes including circles, ovals, triangles, slit shapes, polygons, and star shapes. The cross-sectional area of each hole is typically within a range from 0.01 to 100 cm², preferably from 0.05 to 10 cm², and even more preferably from 0.1 to 5 cm². Furthermore, a nozzle or the like may also be connected to each of the holes. The shape and cross-sectional area of the holes can be changed within each block in accordance with the nature of the material being supplied to that block.
The distance between holes, reported as the distance between hole centers, is typically from 1 to 500 mm, and preferably from 10 to 100 mm. The holes of the perforated plate may be through holes that pass through the perforated plate, or may be formed by the attachment of pipes to the perforated plate. Furthermore, the holes may also be tapered. The size and shape of the holes are preferably set so that the pressure loss as the polymer passes through the perforated plate is within a range from 0.1 to 50 kg/cm². Furthermore, the arrangement of the holes belonging to each group can be made in accordance with the desired purpose, and suitable arrangements include positioning the holes in a random arrangement, positioning the holes in concentric shapes which either alternate or follow a periodic arrangement in either the radial direction or the circumferential direction, positioning the holes in an alternating or periodic lattice arrangement, grouping the holes together for each block, or creating a plurality of groups within each block.

There are no particular restrictions on the number of holes within the perforated plate, which may vary depending on factors including treatment conditions such as the dissolution temperature and the pressure, as well as the quantity of solvent, and the molecular weight range for the polymer undergoing dissolution, although typically, in a case where 100 kg/hr of polymer is dissolved, the number of holes required is within a range from 10 to 10⁵, preferably from 50 to 10⁴, and even more preferably from 10² to 10³. Similarly, there are no particular restrictions on the number of blocks, which is typically within a range from 2 to 100 blocks, although considering problems associated with the cost of the facilities, is preferably within a range from 2 to 50, and even more preferably from 2 to 10 blocks.
There are also no particular restrictions on the number of holes within each block, although a typical number is within a range from 1 to 10⁴, and if processing costs are considered, the number of holes is preferably within a range from 1 to 10³, and even more preferably from 1 to 10². The number of holes belonging to each group may be either the same or different.
The material of the perforated plate is preferably a metal material such as stainless steel, carbon steel, hastelloy, nickel, titanium, chrome, or another alloy.

Examples of suitable methods of discharging the polymer through the type of perforated plate described above include methods in which the polymer is dripped from a liquid head or under its own weight, or methods in which a pump or the like is used to pressurize and force out the polymer. In order to suppress variations in the quantity of polymer flowing down through the reactor, force feeding the polymer using a pump with a measuring function such as a gear pump is preferred.
A filter is preferably provided in a position within the flow path that is upstream from the perforated plate.By employing a filter, impurities likely to cause blockages of the perforated plate holes can be removed. The type of filter used is selected so that impurities of sizes equal to or exceeding the hole diameter of the holes within the perforated plate can be removed, while the filter itself is undamaged by the passage of the polymer.

### (D-2) Support(s)

The polymer discharged from the perforated plate holes flows down along support. The polymer discharged from the perforated plate holes flows down along the support. Examples of specific structures for the support include wire-type structure, chain or lattice-type (wire mesh-type) structure in which a wire material has been linked together, three dimensional lattice structure in which a wire material has been interlinked in a so-called jungle-gym type structure, thin plate-type structure which may be either flat or curved, and perforated plate-type structure. In addition, in order to increase the contact surface area between the polymer and the solvent and/or molecular weight reducing agent, and enable efficient extraction of impurities dissolved within the polymer and impurities generated through thermal degradation within the solution, the polymer is preferably caused to flow down along support which contain indentations or irregularities that oppose the downward flow direction of the polymer, thereby actively initiating mixing and surface renewal within the polymer flow. Support such as wire-type structure with irregularities that oppose the downward flow direction of the polymer, thereby hindering the downward flow of the polymer, are also preferred. Using combinations of these types of supports, and positioning different supports in different locations in accordance with the nature of the material supplied from each of the perforated plate blocks is also desirable. Furthermore, depending on the purpose of the treatment, the supports may be positioned so that the material flows supplied from each of the blocks do not merge on the supports, or may also be positioned so that the material flows do merge on the supports.

A wire-type support refers to a material in which the ratio of the length in a direction perpendicular to a cross-section, relative to the average length around the outer circumference of that cross-section, is extremely large. There are no particular restrictions on the surface area of the cross-section, but typically, the surface area is within a range from 10⁻³ to 10² cm², and is preferably from 10⁻³ to 10 cm², and even more preferably from 10⁻² to 1 cm². There are also no particular restrictions on the shape of this cross-section, which is typically selected from shapes including circles, ovals, triangles, squares, polygons, and star shapes and the like. The cross-sectional shape may stay the same throughout the length of the support, but may also vary. Furthermore, the wire may also be hollow. The term "wire" includes both single wire strands, as well as materials in which a plurality of wire strands are combined by a method such as twisting the wires together. The surface of the wire may be smooth, may include indentations, or may be partially covered with protrusions or the like.

A chain-type support refers to a material in which rings formed using a wire material described above have been interlinked. The shape of these rings may be circular, oval, rectangular, or square or the like. The interlinking of these rings may be one dimensional, two dimensional or three dimensional.

A lattice-type (wire mesh-type) structure refers to a material in which a wire material described above has been linked together in a lattice-type arrangement. The wire may be either straight or curved, and the angles involved in the linking can be selected as desired. There are no particular restrictions on the surface area ratio between solid material and space when the lattice-type (wire mesh-type) material is viewed from a direction perpendicular to the surface of the lattice, but the ratio is typically within a range from 1:0.5 to 1:1,000, preferably from 1:1 to 1:500, and even more preferably from 1:5 to 1:100. This surface area ratio is preferably equal across the horizontal direction, whereas in the vertical direction, the surface area ratio is preferably either equal, or shifts to a larger proportion of space towards the lower portions of the support.

A three dimensional lattice-type structure refers to a material in which a wire material has been linked together in a three dimensional lattice similar to a so-called jungle gym. The wire may be either straight or curved, and the angles involved in the linking can be selected as desired.

A wire-type support with irregularities within the downward flow direction of the polymer refers either to a structure in which rod-like objects with a circular cross-section or a polygonal cross-section are attached at right angles to the wire, or to a structure in which circular discs or circular cylindrical objects are attached to the wire. The level difference provided by these irregularities is preferably at least 5 mm. Specific examples of the support include circular disc-fitted wires in which a wire is passed through the center of a series of circular discs of thickness 1 to 50 mm, which have a diameter that is at least 5 mm larger than the wire diameter but is no more than 100 mm, and the spacing between the circular discs is set to value within a range from 1 to 500 mm.

Although there are no particular restrictions on the ratio between the volume of the support disposed inside the dissolver and the internal volume of the dissolver, the ratio is typically within a range from 1:0.5 to 1:10⁷, and is preferably from 1:10 to 1:10⁶, and even more preferably from 1:50 to 1:10⁵. The ratio (support volume : internal volume of the dissolver) is preferably equal across the horizontal direction, whereas in the vertical direction, the ratio is preferably either equal, or shifts to a larger proportion for the internal volume of the dissolver towards the lower portions of the support.

Depending on the shape of the support, either a single support or a plurality of supports may be provided. In the case of wire-type or chain-type support, the number of support is typically within a range from 1 to 10⁵, and preferably from 3 to 10⁴. In the case of lattice-type support, two dimensionally linked chain-type support, thin-plate type support, and perforated plate-type support, the number of support is typically within a range from 1 to 10⁴, and preferably from 2 to 10³. In the case of a three dimensionally linked chain-type support or a three dimensional lattice-type support, the decision as to whether to use a single support, or to divide the support and provide a plurality of support, can be made with due consideration of factors such as the size of the reactor and the space available for installing the support.
In those cases where a plurality of supports are provided, spacers or the like are preferably used to ensure that the supports do not contact each other.

Although there are no particular restrictions on the material used for forming the support, the material is typically selected from amongst stainless steel, carbon steel, hastelloy, and titanium and the like. Furthermore, if required, the wire may also be subjected to any of a variety of surface treatments such as plating, lining, passivity treatment, or acid washing.

In the present invention, usually, the polymer is supplied from one or more perforated plate holes to each support, although the number of holes can be selected appropriately in accordance with the shape of the support. Furthermore, causing the polymer that has been discharged through a single hole to flow down a plurality of supports is also possible. Moreover, depending on the purpose of the treatment, the polymer can be supplied from the holes of a plurality of perforated plate blocks to a single support, or can also be supplied from the holes of a single block to one or more supports.
There are no particular restrictions on the positioning of the support, provided the thermoplastic polymer is able to flow down along the support. Suitable methods for attaching the support to the perforated plate include passing the support through the perforated plate holes, and fixing the support beneath the perforated plate holes.
Although there are no particular restrictions on the length of the support, in order to increase the efficiency of the treatment the length is preferably within a range from 0.5 to 50 m, even more preferably from 1 to 20 m, and most preferably from 2 to 15 m.

In the present invention, because a method is employed in which the thermoplastic polymer flows down the surface of the support, the surface area of the surface layer of the of the thermoplastic polymer can be increased significantly. In other words, when S1 and S2 satisfy the relationship that S1/S2 > 1 where S 1 is the surface area of the thermoplastic polymer flowing down along the support and S2 is the contact area between the support and the polymer, the thermoplastic polymer readily reacts with the solvent, which leads to the efficient proceeding of the dissolution. In addition, the number of supports can be increased to enhance the amount of treatment.

Here, S 1 is the surface area of the flowing-down thermoplastic polymer, and S2 is the contact area between the support and the polymer. In contrast, cases in which S1/S2 = <1 refer to situations in which the support are either flat plates or the internal walls of a wetted-wall column, and in these cases, not only does the treatment capability per unit volume of the dissolver decrease markedly, but the downward polymer flows can merge and form aggregates, causing an additional deterioration in the efficiency of the dissolution process.

In the present invention, because a method is employed in which the thermoplastic polymer that is distributed to each of the supports by the perforated plate flows down the surface of the corresponding supports while being retained on that supports, the contact surface area between the thermoplastic polymer and the solvent vapor, and the mixing effect realized by the downward flow of the polymer can both be increased dramatically, and the polymers retained on each of the supports cannot merge to form aggregates, meaning the dissolution efficiency is extremely high.

### (D-3) Solvent Supply Device

Possible methods that can be employed in those cases where a solvent is supplied to the inside of the dissolver include (1) methods in which, as described above, the holes of the perforated plate are divided into two or more blocks, and arbitrary polymers and/or solvents are supplied simultaneously to each block at desired supply rates to effect dissolution, (2) methods in which the solvent is absorbed by, or incorporated into the thermoplastic polymer in advance, and this mixture is then supplied to the dissolver to effect dissolution, (3) methods in which the solvent is introduced directly into the main body of the dissolver, as well as suitable combinations of these methods.
In those cases where the solvent is introduced directly into the main body of the dissolver, supply of the solvent can be conducted through an inlet positioned at a desired location in the dissolver. The position of the solvent inlet may be within either the liquid phase region at the bottom of the dissolver, or the gas phase region that sits above the liquid phase region at the bottom of the dissolver. If introduction of the solvent occurs within the gas phase region, then the inlet is preferably separated from the venting ports.

### (D-4) Temperature and Pressure

The dissolution temperature can be set to an appropriate level by controlling the temperature of a heater or heating jacket disposed either within the side walls of, or within the interior of, the dissolver that encloses the support, or by providing a heater or heating medium inside the support and then controlling the temperature of this heater or medium.
The pressure inside the dissolver can be set to an appropriate level by connecting the dissolver to either a pressurization device or a pressure reduction device.
The temperature and pressure during dissolution and/or depolymerization are preferably selected in accordance with the nature of the thermoplastic polymer undergoing treatment, the solvent, and/or the molecular weight reducing agent.

For example, the temperature is preferably set so that, under the treatment pressure being used, the atmospheric temperature inside the dissolver is either equal to, or higher than, the boiling point of at least one of the components of the solvent. By setting the temperature in this manner, even a small quantity of solvent can be used to generate an adequate quantity of solvent vapor inside the dissolver, enabling the dissolution process to proceed with favorable efficiency. The solvent vapor is absorbed by the polymer retained on the support, causing the polymer to swell, and also generates a low viscosity polymer solution which flows down along the support, so that a portion of the solvent generates the polymer solution that is extracted from the dissolver, whereas another portion returns to vapor form inside the dissolver and dissolves more polymer. The solvent does not only act in vapor form, and a portion also condenses within the upper regions of the dissolver, and then flows down the support in liquid form.

On the other hand, in order to ensure the efficient production of a high quantity polymer, the temperature is preferably equal to, or higher than, either the glass transition temperature of the thermoplastic polymer undergoing treatment, or the temperature at which the polymer undergoes crystallization. Moreover, the temperature is preferably set to a high value, but must be kept below the temperature at which the polymer undergoes thermal degradation.
In order to ensure conditions suitable for generating the solvent vapor, as well as conditions suited to the thermoplastic polymer undergoing treatment (namely, a temperature that is equal to, or higher than, the glass transition temperature or the polymer crystallization temperature, but no higher than the temperature at which thermal degradation of the polymer becomes significant), the treatment pressure is preferably selected from amongst normal pressure, applied pressure, or reduced pressure in accordance with the properties of the solvent being used.
Furthermore, under applied pressure or reduced pressure conditions, one preferred method involves introducing an inert gas that exerts no deleterious effects on the dissolution and/or depolymerization treatment into the dissolver, so that oxygen dissolved within the thermoplastic polymer and/or impurities generated during the depolymerization process can be flushed out of the dissolver together with the inert gas. Especially, in order to suppress polymer degradation, enabling the production of a solution of superior quality, and also prevent contamination of the dissolver (or the depolymerization reactor), the oxygen concentration within the gas phase portion inside the dissolver is preferably no more than 5% by volume.

In a surprising finding, investigations by the inventors of the present invention revealed that introduction of an inert gas into the dissolver actually improves the fluidity of the melted thermoplastic polymer flowing down the support, and particularly in those cases where treatment is conducted under reduced pressure, the polymer undergoes foaming, thereby dramatically increasing the surface area and significantly improving the renewal process of the polymer surface layer, which enables the dissolution and/or depolymerization to proceed in an extremely short period of time. The reasons for these findings are not entirely clear, although it is surmised that the changes in the interior and surface states of the thermoplastic polymer are responsible for the dramatic increase in the treatment speed.

The inert gas introduced into the system preferably has no deleterious effects on the resin such as coloration, transformation, or decomposition, and suitable examples include nitrogen, argon, helium, carbon dioxide, lower hydrocarbon gases, and mixtures thereof. Nitrogen, argon, helium, or carbon dioxide are preferred as the inert gas, and of these, in terms of ease of availability, nitrogen is particularly desirable.
The quantity of inert gas introduced in the present invention is preferably within a range from 0.05 to 100 mg per 1 g of the polymer supplied to the dissolver. By ensuring that the quantity of the inert gas is at least 0.05 mg per 1 g of the polymer undergoing extraction, satisfactory foaming of the resin is achieved, and the treatment effects described above can be enhanced. On the other hand, restricting the inert gas quantity to no more than 100 mg facilitates pressure reduction. The quantity of the inert gas is even more preferably within a range from 0.1 to 50 mg, and most preferably from 0.2 to 10 mg, per 1 g of the extracted polymer.

Suitable methods of introducing the inert gas include methods in which the gas is introduced directly into the dissolver, methods in which the inert gas is absorbed or incorporated into the thermoplastic polymer in advance, and this absorbed and/or incorporated gas is then released from the thermoplastic polymer under reduced pressure and thus introduced into the dissolver, and combinations of these methods. Here, the term "absorbed" refers to the case in which the inert gas is dissolved within the polymer and does not exist as gas bubbles, whereas the term "incorporated" means the gas exists as bubbles within the polymer. In those cases when the inert gas exists as gas bubbles, the size of these bubbles is preferably as small as possible, and the average gas bubble diameter is preferably no more than 5 mm, and even more preferably 2 mm or smaller.

### (D-5) Treatment Time

The treatment time refers to the combined total of the time required for the thermoplastic polymer to flow down the support and the time the polymer is retained in the bottom of the dissolver, and is preferably within a range from 10 seconds to 100 hours, even more preferably from 1 minute to 10 hours, even more preferably from 5 minutes to 5 hours, and most preferably from 20 minutes to 3 hours.

### (D-6) Dissolution Capability

In the case of wire-type support, the dissolution capability of the dissolver of the present invention increases in proportion to the number of supports, offering the advantage that scaling up the design is relatively simple.
In the case of wire-type support, the flow rate of thermoplastic polymer for each support is preferably within a range from 10⁻² to 10² liters/hour. By ensuring the flow rate falls within this range, a satisfactory treatment capability can be achieved, and the dissolution rate can be increased dramatically. Flow rates within a range from 0.1 to 50 liters/hour are even more desirable.

In the case of support such as lattice-type (wire mesh-type) support, where wire sections are interlinked, the polymer flow rate is preferably within a range from 10⁻² to 10² liters/hour, and even more preferably from 0.1 to 50 liters/hour, for each vertical wire structure within the support.
In the case of support such as thin plate-type support which do not employ wire structures, the flow rate is preferably within a range from 10⁻² to 10² liters/hour, and even more preferably from 0.1 to 50 liters/hour, per perforated plate hole that supplies polymer to the support.

Using PET as an example, as follows is a description of the method of producing a thermoplastic polymer solution from a thermoplastic polymer using the dissolver of the present invention, based on the drawings.

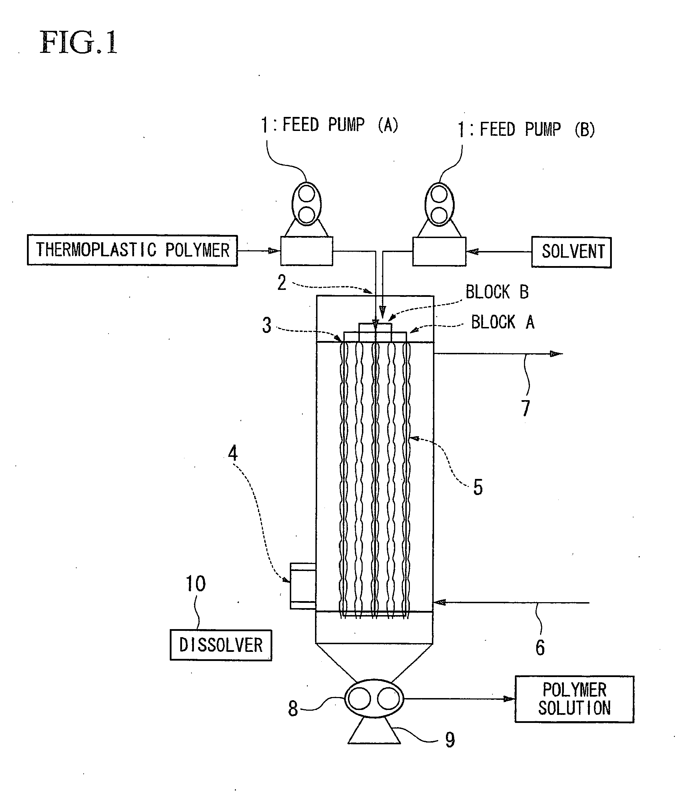

In FIG 1, a PET resin is supplied to a dissolver 10 via a raw material supply port 2 using a feed pump (A) 1, and this resin passes through the holes within a block A on a perforated plate 3, enters the dissolver 10, and then flows down supports 5. On the other hand, a solvent is supplied using a feed pump (B) 1, and also flows down along the supports 5.

Blocks have been provided in the example shown in the figure, but these blocks may also be treated as a single block, and PET and the solvent can then be supplied simultaneously to this single block. Alternatively, the solvent can also be supplied directly to the dissolver, without passing through the feed pump 1 or the perforated plate 3, via an inlet positioned in an arbitrary location in the dissolver main body. The position of this solvent inlet may be within either the liquid phase region at the bottom of the dissolver, or the gas phase region that sits above the liquid phase region at the bottom of the dissolver.
The polymer solution obtained by the dissolution of the PET resin in the solvent is discharged from a discharge port 9 using a drainage pump 8.

After falling to the lower portion of the dissolver, the polymer solution is extracted from the discharge port using the drainage pump, but during this process, the quantity of solution accumulated in the lower portion of the dissolver is preferably kept as constant as possible. One example of a method of controlling the quantity of accumulated solution involves inspecting the quantity of solution through an observation window, or using a level meter such as a capacitance meter to monitor the quantity of accumulated solution, and then adjusting the flow rates through the feed pumps and the drainage pump accordingly.
The feed pumps, the dissolver main body, the drainage pump, and the transport piping and the like are heated and insulated using a heater or a jacket.

In the example shown in the figure, a pressure reduction pipe is provided in the dissolver main body as a pressure reduction exhaust port 7. In the case of PET resin, which has a melting point of approximately 255°C and undergoes marked thermal decomposition at temperatures of 280° C or higher, in order to ensure that the boiling point of the solvent used falls within this temperature range, either the pressure inside the dissolver can be adjusted to an appropriate reduced pressure state, or alternatively, the dissolver can be connected to a pressurization device, and the pressure inside the dissolver adjusted to an appropriate pressurized state.
Dissolution can be conducted using either a single dissolver or two or more dissolvers.

The steps required for producing the polymer solution from the raw materials can be conducted using a batch-type operation or using a continuous operation.
In the case of a batch operation, the entire quantities of the raw materials and other reactants are supplied to the dissolver, and following reaction for a predetermined period, the entire reaction product is transferred to the next dissolver. In contrast, in the case of a continuous operation, the raw materials and reactants are supplied continuously to each of the dissolvers, and the dissolved product is discharged continuously. In order to produce large quantities of a polymer solution of uniform quality, a continuous operation is preferred.

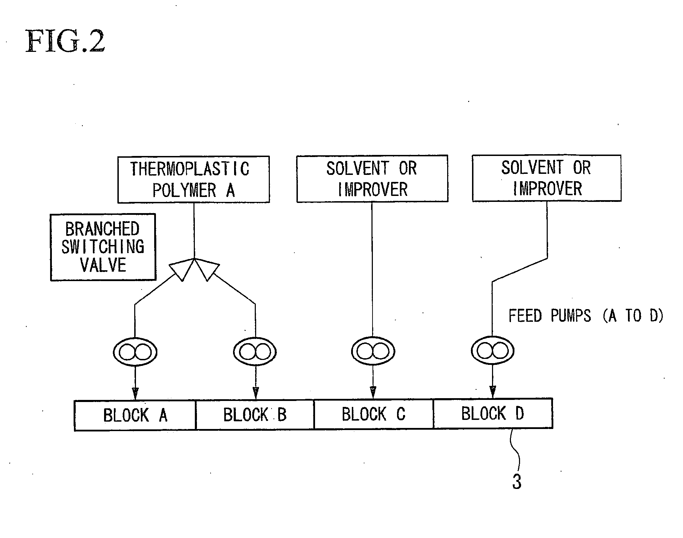

FIG 2 is a specific example of a method of supplying a polymer, and a solvent or an improver to each block of the perforated plate 3.
FIG 2 shows an example in which either one or a plurality of different polymers, and one or more solvents or improvers are supplied from each block of the perforated plate. As shown in the figure, the supply rate for each of the supplied materials is set separately for each block (A to D) of the perforated plate by using a series of mutually independent feed pumps (A to D), thereby enabling the production of a polymer solution with any arbitrary composition.
The supply rate for each block (A to D) of the perforated plate can be changed as desired during the dissolution operation, meaning small quantities of a large variety of polymer solutions can be produced cheaply and at high quality.

### (E) Depolymerization Reactor and Depolymerization Method

The term "depolymerization reactor" used in the present invention refers to a reactor in which a thermoplastic polymer is supplied, in a melted state, from a raw material supply port to the interior of the depolymerization reactor, and the polymer is then discharged through the holes of a perforated plate and subsequently depolymerized through contact with the vapor of a molecular weight reducing agent, while flowing down along the surface of support disposed inside the depolymerization reactor, thereby producing a depolymerization product and/or a solution of a depolymerization product.
With the exception of the requirement to use a molecular weight reducing agent, the structure of a depolymerization reactor of the present invention and the associated depolymerization method can simply employ the method described above in section (D) relating to the dissolver and dissolution method.

The product obtained using the dissolution method and/or depolymerization method of the present invention can be subjected to further purification and then reused as a polymer raw material. For example, in the case of a polyolefin resin, the resin isolated and recovered from the solution can be used for material recycling, and in the case of a PET resin, the depolymerization product can be subjected to a transesterification reaction by adding MeOH to produce dimethyl terephthalate (DMT), and the purified DMT can then be chemically recycled and used as the raw material for a polycondensation reaction.

During the transesterification reaction, the reaction temperature is preferably in the range from 50 to 150°C, and the reaction pressure is preferably in the range from 0.0 to 0.59 MPa. When the temperature and pressure are within these ranges, the transesterification reaction proceeds sufficiently. The transesterification reaction time is preferably 30 minutes to 4 hours.
The transesterification catalyst here used may be a conventional known transesterification catalyst; however, at least one compound selected from the group consisting of carbonates, hydrogen carbonates and carboxylates of alkali metals and alkali earth metals is preferably used in terms of high catalytic activity. Sodium carbonate is most preferably used.

The mixture obtained from the transesterification reaction contains DMT, MeOH, EG, monomers derived from copolyesters, as well as by-products of the EG depolymerization reaction and the transesterification reaction such as water, dioxane, and dimethyl ether.
A recrystallization operation is performed using the mixture per se, or when the crystal of DMT does not completely dissolve, the mixture is heated and the copolymer composition is dissolved in the mixed solution. Here, the mixture is once heated at the transesterification reaction temperature, or at a temperature within the range from 60 to 150°C depending on the composition of the mixture before dissolving impurities such as the monomers derived from copolyesters in the solution, and is then cooled to a temperature within the range from 10 to 50°C. If necessary, the latent heat of the solvent is preferably used to cool the mixture.

The DMT concentration within the mixed solution is preferably within a range from 10 to 40% by weight. If the concentration of DMT is less than 10% by weight, then the quantity of solvent used increases, which is undesirable from an economic viewpoint. In contrast, if the concentration exceeds 40% by weight, the removal of impurities becomes unsatisfactory.
The mixture subjected to a recrystalization operation undergoes to solid-liquid separation by a centrifugal separation operation or the like, followed by adding MeOH to the resultant cake for the washing thereof.
Here, the amount of MeOH added is preferably in the range from 1- to 5-fold that of DMT. An amount within this range makes the removal of impurities sufficient, which is also desirable from an economic viewpoint.
The washing with MeOH is preferably performed on the order of 1 to 3 times. on under known conditions and recovered as high-purity DMT. However, when the removal of impurities is insufficient depending on the amount of monomers derived from copolyesters, the number of the washings may be further increased. The MeOH-washed DMT is then subjected to distillation purification under known conditions and recovered as high-purity DMT.

The thus obtained high-purity DMT can then be subjected to a transesterification reaction under normal pressure and with no catalyst, by heating to 180 to 250°c with a large excess of EG equivalent to at least 2 mols of EG for each mol of DMT, thereby producing bis(hydroxyethyl) terephthalate (BHET), which is a polymerization intermediate for PET resins. DMT and EG form an equilibrium state under constant heating even without the use of a catalyst, and by using a large excess of EG, the balance can be shifted considerably towards the BHET side of the equilibrium. The amount of EG used in the reaction is preferably on the order of 2 to 30 times by mole, particularly preferably 4 to 10 times by mole that of DMT. Furthermore, the MeOH generated as a by-product of the transesterification reaction must be effectively removed from the system, but EG and DMT are also removed during distillation of the MeOH, meaning a minimum of at least two fractionating columns are preferably provided, and considerable importance must also be placed on the temperature control for each of those fractionating columns.

By conducting these steps, purified DMT is converted to a linear lower oligomer with a molecular weight of 254 to 1,300 containing BHET as the primary component, and this product can be collected as an intermediate raw material for high quality polyester products. Because the transesterification reaction is conducted under normal pressure and with no catalyst, a period of approximately 4 to 10 hours is required for the reaction to proceed to completion, but because the reaction proceeds slowly with no catalyst present, the generation of by-products such as diethylene glycol is minimized.

Using the depolymerization of PET as an example, as follows is a description of a preferred example of the present invention, based on the drawings.

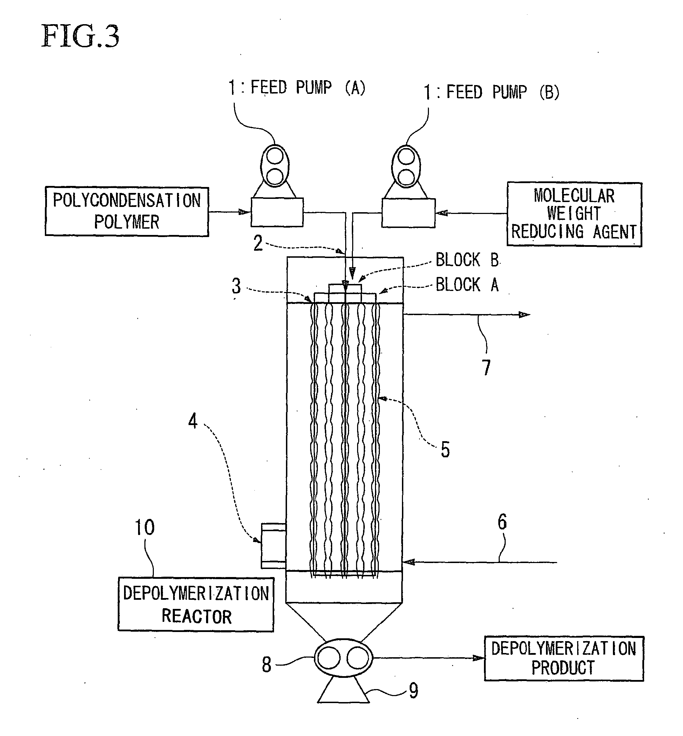

FIG 3 onwards show configurations that represent preferred combinations for realizing the method of the present invention, but the present invention is in no way restricted by these examples.
In FIG 3, a PET resin is supplied to a depolymerization reactor via the raw material supply port 2 using the feed pump (A) 1, whereas a molecular weight reducing agent is supplied to the depolymerization reactor via the raw material supply port 2 using the feed pump (B) 1. These raw materials pass through the holes within a block A and a block B respectively on the perforated plate 3, enter the inside of the depolymerization reactor, and then flow down the supports 5. By appropriate positioning of the blocks of the perforated plate and the supports, the respective flows of these supplied raw materials merge on the supports, thus causing the depolymerization reaction to proceed.

Blocks have been provided in the example shown in the figure, but these blocks may also be treated as a single block, and PET and the molecular weight reducing agent can then be supplied simultaneously to this single block. Alternatively, the molecular weight reducing agent may be also supplied through an inlet formed in any location in the depolymerization reactor body not via transfer pump 1 and perforated plate 3. Here, the location of the inlet for the molecular weight reducing agent may be within the liquid phase region at the bottom of the depolymerization reactor or within the vapor phase region that sits above the liquid phase region at the bottom of the depolymerization reactor.

In the example shown in the figure, a pressure reduction pipe is provided in the main body of the dissolver as the pressure reduction exhaust port 7. In the case of PET resin, which has a melting point of approximately 255°C and undergoes marked thermal decomposition at temperatures of 280°C or higher, in order to ensure that the boiling point of the molecular weight reducing agent used falls within this temperature range, either the pressure inside the dissolver can be adjusted to an appropriate reduced pressure state, or alternatively, the dissolver can be connected to a pressurization device, and the pressure inside the dissolver adjusted to an appropriate pressurized state.

The product obtained by the depolymerization is allowed to flow down to the lower portion of the depolymerization reactor and then extracted through the discharge port using the drainage pump; here, the amount of the product accumulated in the lower portion of the depolymerization reactor is preferably made as constant as possible. One example of a method of controlling the quantity of accumulated product involves inspecting the quantity of product through an observation window, or using a level meter such as a capacitance meter to monitor the quantity of product, and then adjusting the flow rates through the feed pumps and the drainage pump accordingly.
The feed pumps, the depolymerization reactor main body, the drainage pump, and the transport piping and the like are heated and insulated using a heater or a jacket.

The depolymerization reactor used in the present invention may have a stirrer or the like fitted within the bottom of the depolymerization reactor, although such a stirrer is not particularly necessary. Accordingly, the rotational drive section can be removed from the main body of the depolymerization reactor, enabling depolymerization to be conducted under favorably sealed conditions, even when the system is placed under high vacuum. Because the rotational drive section of the drainage pump is covered by the depolymerization product waiting to be discharged, the sealing properties are vastly superior to cases in which a rotational drive section is fitted to the main body of the depolymerization reactor.
The method of the present invention can be conducted using either a single depolymerization reactor or two or more depolymerization reactors.

The steps required for depolymerizing the PET can be conducted using a batch-type operation or using a continuous operation. In the case of a batch operation, the entire quantities of the raw materials and other reactants are supplied to the reactor, and following reaction for a predetermined period, the entire reaction product is transferred to the next reactor. In contrast, in the case of a continuous operation, the raw materials and reactants are supplied continuously to each of the reactors, and the reaction product can be discharged continuously.

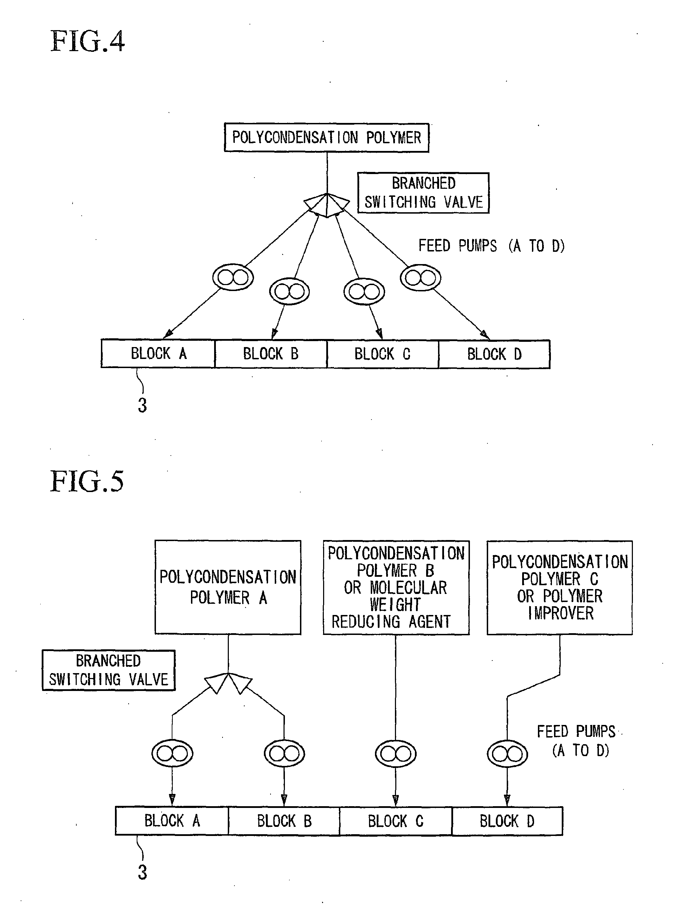

FIG 4 and FIG 5 show specific examples of methods of supplying various PET resins and molecular weight reducing agents to each block of the perforated plate 3.
FIG 4 shows an example in which a single polycondensation polymer is supplied from each block of the perforated plate. When the supply rate of the polycondensation polymer is made capable of being separately set for each block (A to D) of the perforated plate using an each independent transfer pump (A to D), it is possible to adapt to variations in the treatment amount without significantly changing reaction conditions for the depolymerization reactor by supplying the polymer only from any one of the blocks.

FIG 5 shows an example in which a single polycondensation polymer or a plurality of polycondensation polymers and/or one or more molecular weight reducing agents are supplied from each block of the perforated plate. As shown in the figure, the supply rate of each supply material can be separately set for each block (A to D) of the perforated plate using an each independent transfer pump (A to D) to depolymerize a copolymerized polymer having any composition using a molecular weight reducing agent having any composition.
In both examples, the supply rate to each of the blocks (A to D) of the perforated plate can be altered as desired while the depolymerization is in progress, meaning small quantities of a large variety of polymers can be subjected to the depolymerization process.

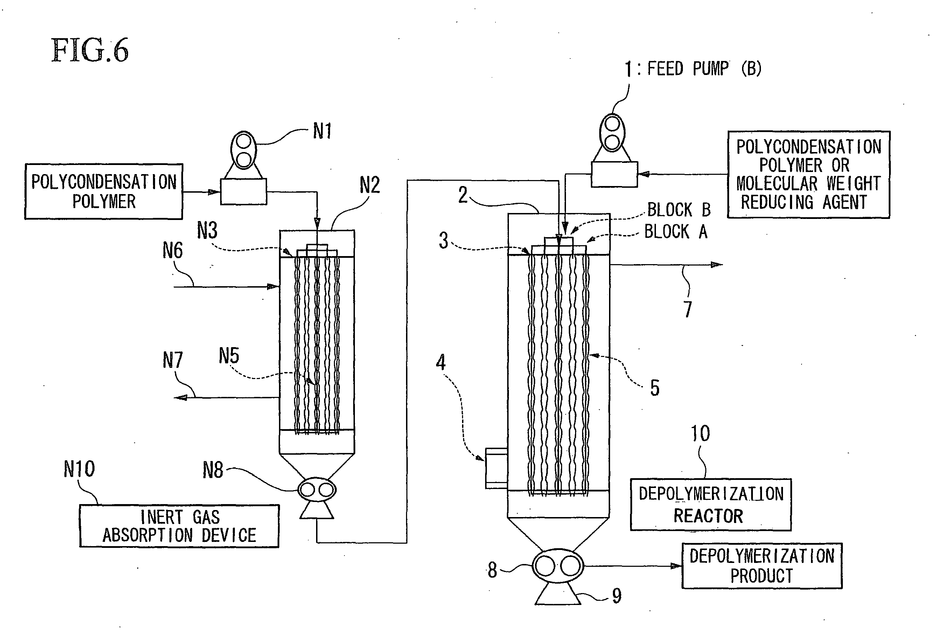

FIG 6 shows a specific example of a depolymerization reactor that realizes the method of the present invention for the case in which an inert gas absorption device is used. PET is supplied from a raw material supply port N2 to an inert gas absorption device N10 using a feed pump N1, passes through a perforated plate N3 and enters the interior of the inert gas absorption device, and then flows down along a series of supports N5. The inside of the inert gas absorption device is controlled at a predetermined pressure via a pressure reduction exhaust port N7, and the PET absorbs an inert gas such as nitrogen introduced from an inert gas supply port N6 while flowing down the supports. Using a drainage-feed pump N8, the PET is then supplied through the raw material supply port 2 and into the depolymerization reactor 10, passes through a block A of the perforated plate 3, enters the inside of the depolymerization reactor, and then flow down along the supports 5.

At this point, a molecular weight reducing agent can be supplied simultaneously to a block B of the perforated plate 3 using the feed pump (B) 1. Instead of supplying the molecular weight reducing agent to the perforated plate 3 of the depolymerization reactor 10, a block A and a block B may be provided on the perforated plate N3 of the inert gas absorption device N10, and the feed pump (B) 1 then used to supply the molecular weight reducing agent to the block B of the perforated plate N3. Alternatively, as previously described in Figure 1, there may be also provided a single block, to which PET and the molecular weight reducing agent are supplied simultaneously. Alternatively, the molecular weight reducing agent may be also supplied through an inlet formed in any location in the body of depolymerization reactor 10 not via transfer pump (B) 1 and perforated plate 3. Here, the location of the inlet for the molecular weight reducing agent may be within the liquid phase region at the bottom of the depolymerization reactor or within the vapor phase region that sits above the liquid phase region at the bottom of the depolymerization reactor.

In the example shown in the figure, a pressure reduction pipe is provided in the main body of the dissolver as the pressure reduction exhaust port 7. In the case of PET resin, which has a melting point of approximately 255°C and undergoes marked thermal decomposition at temperatures of 280° C or higher, in order to ensure that the boiling point of the molecular weight reducing agent used falls within this temperature range, either the pressure inside the dissolver can be adjusted to an appropriate reduced pressure state, or alternatively, the dissolver can be connected to a pressurization device, and the pressure inside the dissolver adjusted to an appropriate pressurized state. The depolymerization product is discharged from discharge port 9 by drainage pump 8. The transfer pumps, inert gas absorption reactor body, depolymerization reactor body, drainage pumps, transfer pipings, branched switching valve, pressure-control valve, and the like are heated and insulated using a heater or jacket.

### (F) Polymerization Reactor Suited to a Cleaning Method of the Present Invention, and a Method of Cleaning such a Reactor

### (F-1) Polymerization Reactor Principles

A polymerization method used within a polymerization reactor suited to a cleaning method of the present invention is a method wherein a polymerization intermediate for a polymer capable of being polymerized by a melt polycondensation reaction is supplied, in a melted state, from a raw material supply port to a polymerization reactor, is discharged through the holes of a perforated plate, and then undergoes polymerization under reduced pressure, while flowing down along the surface of support under the effects of gravity.

As described below, when appropriate conditions are satisfied by the characteristics of the polymerization intermediate, the structure of the polymerization reactor, and the polymerization method, the polymerization intermediate flowing down along the support becomes a state containing a large amount of foam; as the polymerization proceeds, the polymer forms a foam ball (aggregate) type structure and tumbles down towards the bottom of the polymerization reactor, thereby exhibiting a behavior of rapid movement.
As a result, the method of the present invention has the advantages that the contact surface area between the polymer and the vapor phase and the polymer mixing effect are dramatically increased; by-products from the polycondensation reaction (ethylene glycol in the case of PET) and impurities generated by thermal decomposition during polymerization (acetaldehyde in the case of PET) can be effectively removed from the polymerization intermediate; the polymerization rate can be increased markedly; and a high-quality polymer with minimal residual impurities can be produced.

Consequently, the method of the present invention has the merits that the polymerization rate is dramatically increased compared to conventional melt polymerization techniques; and a high-quality polymer with minimal residual impurities can be produced at a polymerization temperature far lower than that attainable using conventional known polymerization reactores.
During further studies, the present inventors have found that the holes of a perforated plate in the polymerization reactor can be grouped within a single block or grouped into two or more blocks, so that the polymerization can also be conducted by supplying any polymerization intermediates and/or polymer modifier simultaneously to each block at any supply rate.

As a result of the studies, it has been found that a uniformly mixed polymer of consistent quality can surprisingly be obtained despite no use of a stirring mechanism such as a stirring blade when the polymerization is performed while dropping a combined flow of polymerization intermediates supplied from the blocks of holes in a perforated plate comprising at least two blocks depending on the structure and placement of the support. As a consequence, it has become possible to produce a polymer whose characteristics are improved by copolymerizing a dissimilar monomer or blending a modifier, at high quality and low cost comparable to those of the original polymer whose characteristics are to be improved.
The polymerization intermediates supplied from the blocks can also be the same as each other, of course; and the supply rate can also be set for each block to precisely control the polymerization rate and the polymerization degree of the polymer or to broaden the molecular weight distribution to improve the melt fluidity.

### (F-2) Description of Polycondensation Polymer

For the purpose of the present invention, the polycondensation polymer refers to a polymer having a structure in which at least one type of monomers containing 2 or more functional groups capable of undergoing condensation are bonded together via bonding of the functional groups. The monomer may be a monomer in which the functional groups are directly bonded to an aliphatic hydrocarbon group, or a monomer in which the functional groups are directly bonded to an aromatic hydrocarbon group.

Specific examples of the polycondensation polymer include polymers with structures in which aliphatic hydrocarbon groups are bonded together via the bonding of functional groups, such as aliphatic polyesters, aliphatic polyamides, and aliphatic polycarbonates; polymers with structures in which aliphatic hydrocarbon groups and aromatic hydrocarbon groups are bonded together via the bonding of functional groups, such as aliphatic aromatic polyesters, aliphatic aromatic polyamides, and aliphatic aromatic polycarbonates; and polymers with structures in which aromatic hydrocarbon groups are bonded together via the bonding of functional groups, such as aromatic polyesters and aromatic polyamides.
These polycondensation polymers may be either homopolymers or copolymers. Furthermore, copolymers containing different linkages such as ester linkages, amide linkages and carbonate linkages in either random or block-type arrangements are also suitable. Specific examples of these types of copolymers include polyester carbonates and polyesteramides.

The polymerization intermediate is a polymer in the early stage of polymerization with a lower polymerization degree than that of the final product polymer, and may also contain oligomers or monomers. The intermediate is a product of preliminary polymerization to a desired polymerization degree using a reactor such as a conventional known vertical stirring polymerization reactor, a horizontally-stirred polymerization reactor with a uniaxial or biaxial stirring blade, a gravity flow-type thin film polymerization reactor with plates, a thin film polymerization reactor allowing gravity flow of the polymer on an inclined plane, a wetted-wall column, or the like.
By way of example, a polymerization intermediate for polyester is produced by polycondensation between a compound having hydroxyl groups and a compound having carboxyl groups or a compound having lower alcohol esters of carboxyl groups.
A polymerization intermediate for polyamide is produced by polycondensation between a compound having amino groups and a compound having carboxyl groups. A polymerization intermediate for polycarbonate is produced by polycondensation between a compound in which the carboxyl groups thereof have aryloxy or alkoxy groups at both ends and a compound having hydroxyl groups.

By way of specific example, a polymerization intermediate for aliphatic polyester is produced by polycondensation between a monomer in which hydroxyl groups are directly bonded to an aliphatic hydrocarbon group of 1 to 30 carbon atoms (e.g., ethylene glycol) and a monomer in which carboxyl groups are directly bonded to an aliphatic hydrocarbon group of 1 to 30 carbon atoms (e.g., adipic acid) or by polycondensation between monomers in each of which hydroxyl and carboxyl groups are directly bonded to an aliphatic hydrocarbon group of 1 to 30 carbon atoms (e.g., glycolic acid).

A polymerization intermediate for aliphatic aromatic polyester is produced by polycondensation between a monomer in which hydroxyl groups are directly bonded to an aliphatic hydrocarbon group of 1 to 30 carbon atoms (e.g., ethylene glycol, 1,3-propanediol, 1,3-butanediol, 1,4-butanediol, neopentylglycol, 1,6-hexanemethylene glycol, 1,4-cyclohexanediol, 1,4-cyclohexanedimethanol) and a monomer in which carboxyl groups are directly bonded to an aromatic hydrocarbon group of 6 to 30 carbon atoms (e.g., terephthalic acid, isophthalic acid, oxalic acid, succinic acid, adipic acid, dodecanedioic acid, fumaric acid, maleic acid, 1,4-cyclohexanedicarboxylic acid, 5-sodium sulfoisophtalate, 3,5-dicarboxybenzenesulfonate, 1,4-cyclohexanedicarboxylic acid) or a monomer in which the carboxyl groups of these compounds have been esterified with a lower alcohol.

A polymerization intermediate for aromatic polyester is produced by polycondensation between a monomer in which hydroxyl groups are directly bonded to an aromatic hydrocarbon group of 6 to 30 carbon atoms (e.g., bisphenol A) and a monomer in which carboxyl groups are directly bonded to an aromatic hydrocarbon group of 6 to 30 carbon atoms (e.g., terephthalic acid).
A polymerization intermediate for aliphatic polyamide is produced by polycondensation between a monomer in which amino groups are directly bonded to an aliphatic hydrocarbon group of 2 to 30 carbon atoms (e.g., hexamethylenediamine) and a monomer in which carboxyl groups are directly bonded to an aliphatic hydrocarbon group of 1 to 30 carbon atoms (e.g., adipic acid).

A polymerization intermediate for aliphatic aromatic polyamide is produced by polycondensation between a monomer in which amino groups are directly bonded to an aliphatic hydrocarbon group of 2 to 30 carbon atoms (e.g., hexamethylenediamine) and a monomer in which carboxyl groups are directly bonded to an aromatic hydrocarbon group of 6 to 30 carbon atoms (e.g., terephthalic acid).
A polymerization intermediate for aromatic polyamide is produced by polycondensation between a monomer in which amino groups are directly bonded to an aliphatic hydrocarbon group of 6 to 30 carbon atoms (e.g., para-phenylenediamine) and a monomer in which carboxyl groups are directly bonded to an aromatic hydrocarbon group of 6 to 30 carbon atoms (e.g., terephthalic acid).

A polymerization intermediate for aliphatic polycarbonate is produced by polycondensation between a monomer in which hydroxyl groups are directly bonded to an aliphatic hydrocarbon group of 2 to 30 carbon atoms (e.g., 1,6-hexanediol) and a monomer in which phenoxy groups are bonded to both ends of the carboxyl groups thereof (e.g., diphenyl carbonate).
A polymerization intermediate for aliphatic aromatic polycarbonate is produced by polycondensation between a monomer in which hydroxyl groups are directly bonded to an aliphatic hydrocarbon group of 2 to 30 carbon atoms (e.g., 1,6-hexanediol), a monomer in which hydroxyl groups are directly bonded to an aromatic hydrocarbon group of 6 to 30 carbon atoms (e.g., bisphenol A) and a monomer in which phenoxy groups are bonded to both ends of the carboxyl groups thereof (e.g., diphenyl carbonate).

Furthermore, all of these polymerization intermediates also include copolymers produced by preliminary copolymerization thereof with a polyalkylene glycol such as polyethylene glycol, polypropylene glycol, and polytetramethylene glycol.
For specific methods of producing the above polymerization intermediates, one may refer to, for example, "Polymer Synthesis, vol. 1, second edition", 1992 (published by Academic Press, Inc., U.S.A.).

The polymerization degree of a polymerization intermediate suitable for the present invention can be defined by a melt viscosity as evaluated under the condition of a shear rate of 1,000 (sec-1) at a temperature at which polymerization is conducted in the polymerization reactor of the present invention, and the melt viscosity is preferably in the range of 60 to 100,000 (poises). Not less than 60 poises can suppress heavy foaming and splattering of the polymerization intermediate discharged from the holes of the perforated plate of the polymerization reactor; not more than 100,000 (poises) allows the polymerization to rapidly proceed because it enables reaction by-products to be efficiently removed from the system. The range is more preferably 100 to 50,000 (poises), still more preferably 200 to 10,000 (poises), particularly preferably 300 to 5,000 (poises). The reason why a polymerization intermediate having a relatively high polymerization degree is thus preferable in the present invention is that as described above, polymerizing a polymer in a state containing a large amount of foam enables the polymerization rate to be dramatically increased.

### (F-3) Description of Polymer Improver

The polymer modifier, when used, is not particularly limited for the type thereof, and may be a liquid material at temperatures not more than the polymerization temperature of the polymer or a material including solid fine particles at such temperatures. The modifier may also be a material reacting with the polymer to form chemical bonding or a material not reacting with the polymer. It may also be a material having the catalytic effect of promoting polycondensation reaction or a material having the effect of suppressing the activity of a polymerization catalyst contained in a polymerization intermediate.

Specific examples thereof include polyalkylene glycols such as polyethylene glycol, polypropylene glycol, and polytetramethylene glycol, which can be bonded to a polycondensation polymer and which impart, for example, ready stainability, flexibility, anti-noise and/or ant-static properties depending on the blending amount thereof; polyolefins such as polyethylene and polypropylene, which impart crystallization-promoting properties, slidability, and high melt fluidity; and terminal group-modified polyolefins which can be bonded to a polycondensation polymer; inorganic and organic materials such as particulate talc, silica and metal oxide, and multilayer organic powders, which impart mechanical properties, improved gloss in molded products, gas-barrier properties, oxygen absorption properties, antibacterial properties, and flame retardancy, and particulates into which functional groups are introduced capable of bonding to a polycondensation polymer; metal compounds such as those containing titanium, germanium, antimony, tin, aluminum, or cobalt, which impart a polymerization catalytic effect and a hue-improving effect; compounds such as those containing phosphorus, sulfur, or a halogen, which suppress the activity of a polymerization catalyst contained in a polymerization intermediate and inhibit thermal decomposition and the formation of oligomers and the like; and other conventional known additives such as a delusterant, a heat stabilizer, a flame retardant, an antistatic agent, a dye, a pigment, an antifoaming agent, an orthochromatic agent, an antioxidant, an ultraviolet absorber, a crystal nucleating agent, a brightener, and scavengers for impurities and residual monomers.

These modifiers are each supplied through any block of the perforated plate directly or in a mixture with the polymerization intermediate or with oil, polyethylene or the like facilitating dispersion. These modifiers may be supplied separately through the blocks or in a combination of a plurality thereof through the same block.

### (F-4) Description of Polymerization Reactor

The polymerization reactor is a reactor in which the polymerization intermediate described above is supplied to the polymerization reactor in a melted state, is discharged through the holes of a perforated plate, and then undergoes a melt polycondensation under reduced pressure, while flowing down along the surface of a series of support.

### (F-4-1) Perforated Plate

The term "perforated plate" refers to a plate-type body containing a plurality of through holes. By using this perforated plate, drift of the polymerization intermediate is suppressed and localized retention within certain sections inside the reactor is prevented, meaning polymer can be produced at higher and more consistent quality. The holes of the perforated plate in the polymerization reactor are grouped within a single block or grouped into two or more blocks; the polymerization can also be conducted by supplying to each block any polymerization intermediates and/or polymer modifier simultaneously at any supply rate.

Although thickness in particular is not limited for the structure of a perforated plate, it is 0.1-300mm usually the range of 5-150mm still more preferably 1-200mm preferably. The perforated plate must have sufficient strength to withstand the pressure from the supply chamber housing the melt polymerization intermediate, and in those cases where the support within the polymerization reactor is secured to the perforated plate, must also have sufficient strength to support the weight of the support, and the polymerization intermediate falling down the support, meaning perforated plates that have been reinforced with ribs or the like are one preferred option.
The shape of the holes within the perforated plate are usually suitably selected from shapes including circles, ovals, triangles, slit shapes, polygons, and star shapes. The cross-sectional area of each hole is typically within a range from 0.01 to 100 cm², preferably from 0.05 to 10 cm², and even more preferably from 0.1 to 5 cm². Furthermore, a nozzle or the like may also be connected to each of the holes. When divided into two or more blocks, it is also possible to change form and a cross-section area according to the contents of the supply thing for every block.

The distance between holes, reported as the distance between hole centers, is typically from 1 to 500 mm, and preferably from 10 to 100 mm. The holes of the perforated plate may be through holes that pass through the perforated plate, or may be formed by the attachment of pipes to the perforated plate. Furthermore, the holes may also be tapered. The size and shape of the holes are preferably set so that the pressure loss as the polymerization intermediate passes through the perforated plate is from 0.1 to 50 kg/cm². When the holes are grouped into two or more blocks, the holes belonging to each block can also be subjected, according to the desired purpose, to random arrangement, concentric arrangement in the radial direction, alternating or periodic arrangement in the circumferential direction, alternating or periodic arrangement in a lattice form, collective arrangement for each block, or arrangement into a plurality of groups for each block.

The number of holes of the perforated plate is not particularly limited and varies depending on conditions such as reaction temperature and pressure, the amount of a catalyst, the range of molecular weight of an intermediate to be polymerized, and the like; however, for example, there are typically required 10 to 10⁵, preferably 50 to 10⁴, more preferably 10² to 10³ holes when a polymer is produced at a rate of 100 kg/hr. When the holes are grouped into two or more blocks, the number of the blocks is also not particularly limited; however, it is typically in the range of 2 to 100 and preferably in the range of 2 to 50, more preferably 2 to 10 in view of a problem from the costs of facilities. There are also no particular restrictions on the number of holes within each block, although a typical number is within a range from 1 to 10⁴, and if processing costs are considered, the number of holes is preferably within a range from 1 to 10³, and even more preferably from 1 to 10². The number of holes belonging to each group may be either the same or different.
The material of the perforated plate is preferably a metal material such as stainless steel, carbon steel, hastelloy, nickel, titanium, chrome, or another alloy.

Examples of suitable methods of discharging the polymerization intermediate through the type of perforated plate described above include methods in which the polymerization intermediate is dripped from a liquid head or under its own weight, or methods in which a pump or the like is used to pressurize and force out the polymerization intermediate. In order to suppress variations in the quantity of polymerization intermediate flowing down through the reactor, force feeding the polymerization intermediate using a pump with a measuring function such as a gear pump is preferred.
A filter is preferably provided in a position within the flow path that is upstream from the perforated plate. By employing a filter, impurities likely to cause blockages of the perforated plate holes can be removed. The type of filter used is selected so that impurities of sizes equal to or exceeding the hole diameter of the holes within the perforated plate can be removed, while the filter itself is undamaged by the passage of the polymerization intermediate.

### (F-4-2) Support(s)

The polymerization intermediate discharged from the perforated plate holes flows down along the support. Examples of specific structures for the support include wire-type structures, chain or lattice-type (wire mesh-type) structures in which a wire material has been linked together, three dimensional lattice structures in which a wire material has been interlinked in a so-called jungle-gym type structure, thin plate-type structures which may be either flat or curved, and perforated plate-type structures. In addition, in order to efficiently extract reaction by-products and impurities generated through thermal degradation during polymerization, it is preferable to increase the surface area of the resin allowed to flow down and further to cause the polymerization intermediate to flow down along a support having projections and depressions relative to the flow-down direction of the intermediate, thereby actively causing the mixing and surface renewal thereof. Support having structures opposing the downward flow of the resin, such as "a wire-form structure having projections and depressions relative to the flow-down direction of the resin" are also preferable. It is also preferable to use these supports in combination, or when the holes are grouped into two or more blocks, properly arrange the supports depending on the nature of a supply material from each block of the perforated plate. According to the purpose, the supports may be also arranged so that the flows of supply materials from the blocks are not combined with each other on each support or may be arranged so that the flows of the supply materials are combined with each other on each support.

A wire-type support refers to a material in which the ratio of the length in a direction perpendicular to a cross-section, relative to the average length around the outer circumference of that cross-section, is extremely large. There are no particular restrictions on the surface area of the cross-section, but typically, the surface area is within a range from 10⁻³ to 10² cm², and is preferably from 10⁻³ to 10¹ cm², and even more preferably from 10⁻² to 1 cm². There are also no particular restrictions on the shape of this cross-section, which is typically selected from shapes including circles, ovals, triangles, squares, polygons, and star shapes and the like. The cross-sectional shape may stay the same throughout the length of the support, but may also vary. Furthermore, the wire may also be hollow. The term "wire" includes both single wire strands, as well as materials in which a plurality of wire strands are combined by a method such as twisting the wires together. The surface of the wire may be smooth, may include indentations, or may be partially covered with protrusions or the like.

A chain-type support refers to a material in which rings formed using a wire material described above have been interlinked. The shape of these rings may be circular, oval, rectangular, or square or the like. The interlinking of these rings may be one dimensional, two dimensional or three dimensional.
A lattice-type (wire mesh-type) structure refers to a material in which a wire material described above has been linked together in a lattice-type arrangement. The wire may be either straight or curved, and the angles involved in the linking can be selected as desired. There are no particular restrictions on the surface area ratio between solid material and space when the lattice-type (wire mesh-type) material is viewed from a direction perpendicular to the surface of the lattice, but the ratio is typically within a range from 1:0.5 to 1:1,000, preferably from 1:1 to 1:500, and even more preferably from 1:5 to 1:100. This surface area ratio is preferably equal across the horizontal direction, whereas in the vertical direction, the surface area ratio is preferably either equal, or shifts to a larger proportion of space towards the lower portions of the support.

A three dimensional lattice-type structure refers to a material in which a wire material has been linked together in a three dimensional lattice similar to a so-called jungle gym. The wire may be either straight or curved, and the angles involved in the linking can be selected as desired.
A wire-type support with irregularities within the downward flow direction of the polymer refers either to a structure in which rod-like objects with a circular cross-section or a polygonal cross-section are attached at right angles to the wire, or to a structure in which circular discs or circular cylindrical objects are attached to the wire. The level difference provided by these irregularities is preferably at least 5 mm. Specific examples of these supports include circular disc-fitted wires in which a wire is passed through the center of a series of circular discs of thickness 1 to 50 mm, which have a diameter that is at least 5 mm larger than the wire diameter but is no more than 100 mm, and the spacing between the circular discs is set to value within a range from 1 to 500 mm.

Although there are no particular restrictions on the ratio between the volume of the support disposed inside the reactor and the internal volume of the reactor, the ratio is typically within a range from 1:0.5 to 1:10⁷, and is preferably from 1:10 to 1:10⁶, and even more preferably from 1:50 to 1:10⁵. The ratio (support volume : internal volume of the reactor) is preferably equal across the horizontal direction, whereas in the vertical direction, the ratio is preferably either equal, or shifts to a larger proportion for the internal volume of the reactor towards the lower portions of the support.
Depending on the shape of the support, either a single support or a plurality of supports may be provided. In the case of wire-type or chain-type support, the number of supports is typically within a range from 1 to 10⁵, and preferably from 3 to 10⁴. In the case of lattice-type support, two dimensionally linked chain-type support, thin-plate type support, and perforated plate-type support, the number of support is typically within a range from 1 to 10⁴, and preferably from 2 to 10³ In the case of a three dimensionally linked chain-type support or a three dimensional lattice-type support, the decision as to whether to use a single support, or to divide the support and provide a plurality of supports, can be made with due consideration of factors such as the size of the reactor and the space available for installing the support.

In those cases where a plurality of supports are provided, spacers or the like are preferably used to ensure that the supports do not contact each other.
Although there are no particular restrictions on the material used for forming the support, the material is typically selected from amongst stainless steel, carbon steel, hastelloy, and titanium and the like.
Furthermore, if required, the wire may also be subjected to any of a variety of surface treatments such as plating, lining, passivity treatment, or acid washing.

In the present invention, usually, the polymerization intermediate is supplied from one or perforated plate holes to each support, although the number of holes can be selected appropriately in accordance with the shape of the support. Furthermore, causing the polymerization intermediate that has been discharged through a single hole to flow down a plurality of supports are also possible. Moreover, depending on the purpose of the treatment, if a perforated plate is used in which the holes have been divided into two or more blocks, then the polymerization intermediate can be supplied from the holes of a plurality of perforated plate blocks to a single support, or can also be supplied from the holes of a single block to one or more supports.

There are no particular restrictions on the positioning of the support, provided the polymerization intermediate is able to flow down the support. Suitable methods for attaching the support to the perforated plate include passing the support through the perforated plate holes, and fixing the support beneath the perforated plate holes.
Although there are no particular restrictions on the height the polymerization intermediate having passed through the holes flows down along the support, the height is preferably within a range from 0.5 to 50 m, even more preferably from 1 to 20 m, and most preferably from 2 to 10m.

### (F-4-3) Heating Device

The polymerization temperature can be set to an appropriate level by controlling the temperature of a heater or heating jacket disposed within the side walls of the polymerization reactor that encloses the support, or by providing a heater or heating medium inside the support and then controlling the temperature of this heater or medium.

### (F-4-4) Pressure Reduction Device

The pressure inside the polymerization reactor can be set to an appropriate level by connecting a vent positioned at a desired location in the polymerization reactor to a vacuum line, and then appropriately adjusting the degree of pressure reduction. By-products of the polymerization, impurities generated by thermal decomposition during the polymerization, and the small quantity of inert gas introduced into the polymerization reactor as required are all discharged from the vent.

### (F-4-5) Inert Gas Supply Device

In those cases where an inert gas is introduced directly into the polymerization reactor, supply of the inert gas can be conducted through an inlet positioned at a desired location in the polymerization reactor. This inert gas inlet is preferably positioned distant from the perforated plate and in the vicinity of the polymer extraction port. Furthermore, the inlet is preferably distant from the pressure reduction vent.
Alternatively, a method can be employed in which the inert gas is absorbed or incorporated within the polymerization intermediate in advance, and in this case, an additional inert gas supply device is provided upstream from the polymerization reactor of the present invention.

Examples of methods of supplying the inert gas include methods that employ conventional absorption devices such as a packed column absorption device, a tray type absorption device, or a spray column type absorption device disclosed in "Chemical Apparatus Design and Operation", Series No. 2, revised edition, gas absorption pp. 49 to 54 (published March 15, 1981, by Kagaku Kogyo Co., Ltd.), and methods in which the inert gas is injected into the pipes transporting the polymerization intermediate. The most desirable method employs a device in which the polymerization intermediate is caused to absorb the inert gas while flowing down a support within an inert gas atmosphere. In this method, a higher pressure of inert gas is introduced into the inert gas absorption device than the pressure inside the polymerization reactor. This pressure within the inert gas absorption device is preferably within a range from 0.01 to 1 MPa, even more preferably from 0.05 to 0.5 MPa, and most preferably from 0.1 to 0.2 MPa.

### (F-5) Description of Polymerization Method

The inventors of the present invention discovered that by polymerizing a polymerization intermediate with a melt viscosity within the range described above, using an aforementioned polymerization reactor and at a polymerization temperature and degree of pressure reduction described below, splattering of the polymerization intermediate caused by heavy foaming immediately below the perforated plate could be suppressed, deterioration in the polymer quality caused by contamination of the nozzle surface or the wall surfaces of the polymerization reactor could also be suppressed, and surprisingly, the polymer flowing down along the support is converted to a state which incorporates large quantities of foam, generating phenomena in which "the surface area of the polymer increases", and "the polymer develops a foam ball type structure, which tumbles down along the support". At the same time, a dramatic increase in the polymerization rate and an improvement in the polymer hue were also confirmed.
It is thought that the dramatic increase in the polymerization rate is a compound effect arising from the increase in surface area resulting from the incorporation of a large quantity of foam, and the surface renewal effect caused by the plasticizing action of the foam. Furthermore, this foam plasticizing action improves the polymer hue by shortening the residence time for the polymer within the polymerization reactor, and enables a high viscosity polymer that exhibits a high polymerization degree to be extracted easily from the polymerization reactor.

In order to obtain a high quality polymer at a high polymerization degree using a conventional gravity flow-based melt thin-film polymerization reactor such as a wetted-wall column, a polymerization intermediate from the early stages of reaction, which exhibits little coloring but has a much lower polymerization degree than the polymerization intermediate used in the method of the present invention, is polymerized at a higher temperature and with a shorter residence time than is the case for the method of the present invention. Conventional thinking would suggest that if a polymerization intermediate with a high polymerization degree was subjected to melt polymerization, then the coloration of the polymerization intermediate would get progressively stronger, and the residence time during flow down through the polymerization reactor would increase, and the fact that a high quality polymer can be produced would have been totally inconceivable.

However, in the present invention, the inventors discovered that, as described above, by setting the melt viscosity of the polymerization intermediate to a high value, in contravention of conventional thinking, and as described below, setting the polymerization temperature to a low temperature, also in contravention of conventional thinking, the foaming of the polymer could be controlled, and in a surprising finding, the polymerization rate at the low temperature could actually be increased dramatically, and a polymer with a high polymerization degree could be extracted with ease.

### (F-5-1) Polymerization Temperature

The polycondensation reaction temperature is preferably equal to or higher than the (crystalline melting point - 10°C) of the polycondensation polymer, and no higher than the (crystalline melting point + 60°C). By ensuring the reaction temperature is equal to or higher than the (crystalline melting point - 10° C), solidification during the reaction and lengthening of the reaction time can be prevented, whereas by ensuring that the temperature is no higher than the (crystalline melting point + 60°C), thermal decomposition can be suppressed, enabling the production of a polymer of excellent hue. The temperature is even more preferably equal to or higher than the (crystalline melting point - 5°C) and no higher than the (crystalline melting point + 40°C), and is most preferably equal to or higher than the crystalline melting point and no higher than the (crystalline melting point + 30°C). The reason that these types of comparatively low reaction temperatures are preferred in the present invention is because such temperatures facilitate the polymer reaching a state that incorporates a large quantity of foam, thereby enabling the polymerization rate to be increased dramatically.

In this description, the crystalline melting point refers to the peak temperature of the heat absorption peak generated on crystal melting using a Pyris 1 DSC (an input compensation-type differential scanning calorimeter) manufactured by PerkinElmer, Inc., under the conditions described below. The peak temperature was determined using the included analysis software.
Measurement temperature: 0 to 300°C
Rate of temperature increase: 10°C /minute

### (F-5-2) Polymerization Pressure

The melt polycondensation reaction of the present invention must be conducted under reduced pressure to ensure the polymer reaches a state that incorporates a large quantity of foam. The degree of pressure reduction can be set appropriately in accordance with factors such as the sublimation states of the polymerization intermediate and the polycondensation reaction product, and the reaction rate. The reduced pressure is preferably no more than 50,000 Pa, even more preferably no more than 10,000 Pa, even more preferably no more than 1,000 Pa, and most preferably 500 Pa or lower. There are no particular restrictions on the lower limit, although considering factors such as the scale of the facilities required for reducing the pressure within the polymerization reactor, a pressure of at least 0.1 Pa is preferred.
Furthermore, another preferred method involves introducing a small quantity of an inert gas that exerts no deleterious effects on the polycondensation reaction into the polymerization reactor, so that polymerization by-products and/or impurities generated by thermal decomposition during the polymerization can be removed from the polymerization reactor together with the inert gas.

The introduction of an inert gas into a polymerization reactor is conventionally understood to enhance the progression of the reaction by lowering the partial pressure of polymerization by-products, thereby causing a shift in the equilibrium. However, in the present invention, the quantity of inert gas introduced need only be very small, and is too small to expect any significant increase in the polymerization rate as a result of a partial pressure reduction effect, meaning the role of the inert gas in the present invention cannot be explained using conventional wisdom.
Investigations by the inventors of the present invention revealed, in a surprising result, that by introducing an inert gas into the polymerization reactor, the foaming phenomenon observed for the melted polymerization intermediate flowing down along the supports is enhanced significantly, causing a dramatic increase in the surface area of the polymerization intermediate, and a far more favorable surface renewal action. The principles behind these observations are not entirely clear, although it is surmised that these variations in the interior and surface states of the polymerization intermediate are responsible for the dramatic increase in the polymerization rate.

The inert gas introduced into the system preferably has no deleterious effects on the resin such as coloration, transformation, or decomposition, and suitable examples include nitrogen, argon, helium, carbon dioxide, lower hydrocarbon gases, and mixtures thereof. Nitrogen, argon, helium, or carbon dioxide are preferred as the inert gas, and of these, in terms of ease of availability, nitrogen is particularly desirable. The quantity of inert gas introduced in the present invention is preferably kept very small, and is preferably within a range from 0.05 to 100 mg per 1 g of the polymer extracted from the polymerization reactor. By ensuring that the quantity of the inert gas is at least 0.05 mg per 1 g of extracted polymer, satisfactory foaming of the resin is achieved, and the polymerization rate accelerating effect can be enhanced. On the other hand, restricting the inert gas quantity to no more than 100 mg facilitates pressure reduction. The quantity of the inert gas is even more preferably within a range from 0.1 to 50 mg, and most preferably from 0.2 to 10 mg, per 1 g of the extracted polymer.

Suitable methods of introducing the inert gas include methods in which the gas is introduced directly into the polymerization reactor, methods in which the inert gas is absorbed or incorporated into the polymerization intermediate in advance, and this absorbed and/or incorporated gas is then released from the polymerization intermediate under reduced pressure and thus introduced into the polymerization reactor, and combinations of these methods. Here, the term "absorbed" refers to the case in which the inert gas is dissolved within the polymer and does not exist as gas bubbles, whereas the term "incorporated" means the gas exists as bubbles within the polymer. In those cases when the inert gas exists as gas bubbles, the size of these bubbles is preferably as small as possible, and the average gas bubble diameter is preferably no more than 5 mm, and even more preferably 2 mm or smaller.

### (F-5-3) Polymerization Time

The polymerization time refers to the combined total of the time required for the polymer to flow down along the support and the time the polymer is retained in the bottom of the polymerization reactor, and is preferably within a range from 10 seconds to 100 hours, even more preferably from 1 minute to 10 hours, even more preferably from 5 minutes to 5 hours, and most preferably from 20 minutes to 3 hours.
The polymerization method of the present invention includes methods in which the polymer produced by polymerization of the polymerization intermediate is extracted entirely from the polymerization reactor in a one-pass operation, and methods in which a portion of the polymerized polymer is recirculated and introduced into the polymerization reactor for a second time. Among those, the method in which the polymer is extracted entirely in a one-pass operation are preferred. In those cases where some polymer is recirculated, in order to suppress thermal decomposition within the lower region of the polymerization reactor and the recirculation line, the residence times within these regions are preferably kept short, and the temperature is preferably lowered.

### (F-5-4) Polymerization rate

In the case of wire-type supports, the polymerization capability of the polymerization reactor increases in proportion to the number of supports provided within the polymerization reactor, offering the advantage that scaling up the design is relatively simple. In the case of wire-type supports, the flow rate of the polymerization intermediate for each supports is preferably within a range from 10⁻² to 10² liters/hour. By ensuring the flow rate falls within this range, a satisfactory production capability can be achieved, and the polymerization rate can also be increased dramatically. Flow rates within a range from 0.1 to 50 liters/hour are even more desirable.

In the case of supports such as lattice-type (wire mesh-type) supports, where wire sections are interlinked, the polymerization intermediate flow rate is preferably within a range from 10⁻² to 10² liters/hour, and even more preferably from 0.1 to 50 liters/hour, for each vertical wire structure within the support.
In the case of supports such as thin plate-type supports which do not employ wire structures, the flow rate is preferably within a range from 10⁻² to 10² liters/hour, and even more preferably from 0.1 to 50 liters/hour, per perforated plate hole that supplies the polymerization intermediate to the supports.

### (F-5-5) Other

In addition to the aforementioned method in which supply is conducted through a perforated plate of the polymerization reactor, the method of the present invention also includes those cases in which a uniaxial or biaxial mixing device or a static mixer or the like is disposed between the polymerization reactor and the molding device, meaning additives such as stabilizers, nucleating agents, or pigments or the like can then be added to the resin as required.
In the present invention, if required, a variety of different additives such as delustering agents, heat stabilizers, flame retardants, antistatic agents, antifoaming agents, color correction agents, antioxidants, ultraviolet absorbers, crystal nucleating agents, brightening agents, and capture agents for impurities can be either copolymerized or mixed with the polymer. These additives can be added at any stage within the method of the present invention.

In the method of the present invention, the addition of a stabilizer that is appropriate for the polymer undergoing polymerization is particularly desirable. Using polyester resin as an example, the addition of either a pentavalent and/or a trivalent phosphorus compound, or a hindered phenol-based compound is preferred. The quantity added of the phosphorus compound, recorded as the weight proportion of phosphorus atoms within the product polymer, is preferably within a range from 2 to 500 ppm, and even more preferably from 10 to 200 ppm. Specific examples of preferred phosphorus compounds include trimethyl phosphite, phosphoric acid, and phosphorous acid. Phosphorus-based compounds suppress coloration of the polymer and also function as crystal nucleating agents, and are consequently preferred.

A hindered phenol-based compound is a phenol-based derivative in which the positions adjacent to the phenolic hydroxyl group are substituted with substituents that exhibit steric hindrance, and is a compound that also includes at least one ester linkage within the molecule. The quantity added of the hindered phenol-based compound, as the weight proportion of the compound within the product polymer, is preferably within a range from 0.001 to 1% by weight, and even more preferably from 0.01 to 0.2% by weight.
Examples of specific compounds include pentaerythritol, tetrakis[3-(3,5-di-tert-butyl-4-hydroxyphenyl)propionate], 1,1,3-tris(2-methyl-4-hydroxy-5-tert-butylphenyl) butane, octadecyl-3-(3,5-di-tert-butyl-4-hydroxyphenyl)propionate, and N,N'-hexamethylenebis(3,5-tert-butyl-4-hydroxyhydrocinnamide). Using a combination of these stabilizers is another preferred method.

These stabilizers can be added at any stage up to and including molding, but phosphorus compounds are preferably added in the initial stages of the polycondensation reaction, and hindered phenol-based compounds are preferably added during either the initial stages of the polycondensation reaction, or following extraction of the polymer from the polymerization reactor.
Furthermore, in the present invention, the addition of a crystal nucleating agent is also preferred, and using polyester resin as an example, the addition of a phosphorus-based compound, a metal salt of an organic acid, a polyolefin, or a powder of some other resin is preferred. The quantity added of this crystal nucleating agent is preferably within a range from 2 to 1,000 ppm, and even more preferably from 10 to 500 ppm, within the polymer.

Specific examples of suitable compounds include phosphates such as sodium 2,2'-methylenebis(4,6-di-t-butylphenyl)phosphate and sodium bis(4-t-butylphenyl) phosphate, sorbitols such as bis(p-methylbenzylidene)sorbitol, and metal element-containing compounds such as hydroxyaluminum bis(4-t-butylbenzoate). Particularly in the case of preforms for PET bottles, in which the mouth portion is subjected to thermal crystallization, these crystal nucleating agents can be used favorably for accelerating the crystallization and lowering the thermal crystallization temperature.

Furthermore, in the present invention, the addition of a capture agent for low molecular weight volatile impurities is another preferred option. Using the case of PET as an example, the impurity is acetaldehyde, and suitable capture agents include polyamide and polyesteramide polymers and oligomers, and low molecular weight compounds with an amide group or amino group such as 2-aminobenzamide. Specific examples include polyamide and polyethyleneimine polymers such as nylon 6.6, nylon 6, and nylon 4.6, as well as the reaction product of N-phenylbenzeneamine and 2,4,4-trimethylpentene, and Irganox 1098 and Irganox 565 (registered trademarks) manufactured by Ciba Specialty Chemicals Inc. These capture agents are preferably added in the period from removal of the polymer from the polymerization reactor through until supply of the polymer to the molding device.

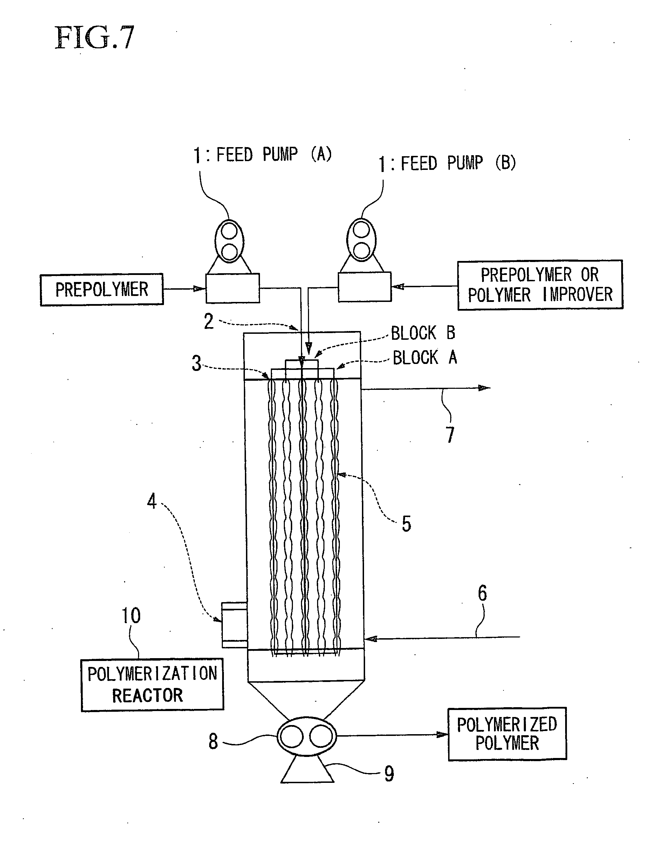

Using a PET polymerization as an example, as follows is a description of the method of producing a polycondensation polymer using the polymerization reactor of the present invention, based on the drawings. In FIG 7, a PET polymerization intermediate is supplied to the polymerization reactor via a raw material supply port 2 using a feed pump (A) 1 and/or a feed pump (B) 1, and this intermediate passes through the holes within a block A and/or the holes within a block B on a perforated plate 3, enters the polymerization reactor, and then flows down a series of support 5. At this point, a polymerization intermediate for a different polymer and/or a polymer improver could also be supplied via the feed pump (A) 1 or the feed pump (B) 1, instead of the PET polymerization intermediate. The perforated plate 3 can, of course, also be configured with a single block instead of a plurality of blocks, and the plurality of feed pumps for the PET polymerization intermediate can be replaced with a single feed pump, with the polymerization intermediate then supplied to the polymerization process using this single feed pump.

The inside of the polymerization reactor is controlled at a predetermined degree of pressure reduction, and the by-product ethylene glycol, and the inert gas such as nitrogen, which can be introduced as required through an inert gas supply port 6, are discharged through a pressure reduction exhaust port 7. The polymerized polymer is discharged from discharge port 9 by drainage pump 8.
During the process in which the polymerization proceeds as the polymerization intermediate flows down along the support, if the perforated plate is divided into two or more blocks, then the blocks and the support may be positioned so that the material flows supplied from each of the blocks do not merge on the support, or may also be positioned so that the supplied material flows do merge on the supports, and this selection can be made in accordance with the purpose of the process.

After falling to the lower portion of the polymerization reactor, the polymerized polymer is extracted from the discharge port using a drainage pump, but during this process, the quantity of polymer accumulated in the lower portion of the polymerization reactor is preferably kept as small and as constant as possible. One example of a method of controlling the quantity of accumulated polymer involves inspecting the quantity of product through an observation window, or using a level meter such as a capacitance meter to monitor the quantity of product, and then adjusting the flow rates through the feed pumps and the drainage pump accordingly.
The feed pumps, main body of the polymerization reactor, the drainage pump, and the transport piping and the like are heated and insulated using a heater or a jacket.

The polymerization reactor may have a stirrer or the like fitted within the bottom of the polymerization reactor, although such a stirrer is not particularly necessary. Accordingly, the rotational drive section can be removed from the main body of the polymerization reactor, enabling polymerization to be conducted under favorably sealed conditions, even when the system is placed under high vacuum. Because the rotational drive section of the drainage pump is covered by the resin waiting to be discharged, the sealing properties are vastly superior to cases in which a rotational drive section is fitted to the main body of the polymerization reactor.
The polymerization can be conducted using either a single polymerization reactor or two or more polymerization reactors.

The process of raising the molecular weight from that of the PET polymerization intermediate to a PET with the desired polymerization degree can be conducted entirely using the method in which the intermediate is supplied through the holes of the perforated plate and then undergoes polymerization while flowing down along the support, but is preferably conducted by an appropriate combination of this method with other polymerization methods such as those that employ a stirred tank-type polymerization reactor or a horizontally-stirred polymerization reactor.
Examples of horizontally-stirred polymerization reactors include screw-type, independent blade-type, uniaxial-type, and biaxial-type reactors, such as the polymerization reactors disclosed in chapter 4, Research Report of Research Group on Reaction Engineering: Reactive Processing Part 2 (Society of Polymer Science, 1992).

Furthermore, stirred tank-type polymerization reactors include any of the stirred tanks described in chapter 11 of Handbook of Chemical Equipment (edited by Society of Chemical Engineers, Japan; 1989).
There are no particular restrictions on the shape of the tank, although typically, a vertical or horizontal circular cylinder is used. Furthermore, there are no particular restrictions on the shape of the stirring blades, and suitable shapes include paddle-type, anchor-type, turbine-type, screw-type, ribbon-type, and double blade-type stirrers.

The steps required for producing the prepolymer from the raw materials can be conducted using a batch-type operation or using a continuous operation. In the case of a batch operation, the entire quantities of the raw materials and other reactants are supplied to the polymerization reactor, and following reaction for a predetermined period, the entire reaction product is transferred to the next reactor. On the other hand, when the steps are performed continuously, the raw materials and reactants may be continuously supplied to each reactor, followed by discharging the reaction product continuously. In order to produce large quantities of a PET of uniform quality and molded products thereof, a continuous operation is preferred.

### (F-6) Method of Cleaning Polymerization Reactor

Next is a description of a method of cleaning a polymerization reactor.
When a polymerization operation that has been conducted using the method described above is halted, the inside of the polymerization reactor is prone to the retention of residual polymerization intermediates, raw materials, and modified products thereof.
As a method of cleaning a conventional stirred tank-type polymerization reactor in which inside of a polymerization reactor is filled with a glycol, and the glycol is then heated to a temperature close to its boiling point while being stirred, thereby depolymerizing and removing any residual polymers and the like has already been disclosed. However, if an attempt is made to apply this type of method to the polymerization reactor of the present invention described above, then the large quantity of residual polymer and the like retained on the support inside the polymerization reactor is stripped from the support and accumulates in aggregate form, and because the reactor is not provided with a stirring mechanism, an extremely lengthy period of time is required to ensure complete depolymerization of the residual polymer.

As a result of intensive investigation, the inventors of the present invention discovered that by causing the residual polymer, polymerization intermediates, and modified products thereof retained on the support to come into contact with a solvent vapor while flowing down along the surface of the support, these residual materials could be stripped from the support and washed away without accumulating as aggregates by using only a small quantity of solvent, and that particularly in those cases where one component of the solvent vapor acts as a molecular weight reducing agent, the residual materials could be decomposed to low molecular weight substances and removed within a very short period of time, even without using a depolymerization catalyst or the like, and the inventors were thus able to complete this aspect of the present invention.

The support within the polymerization reactor is preferably wire-type structure or the like. Regardless of the structure of the support, it is characterized in that a relationship S1/S2 > 1 is satisfied where S 1 is a surface area of the thermoplastic polymer flowing down along the support and S2 is a contact surface area between the support and the thermoplastic polymer. Here, S 1 is the surface area of the flowing-down thermoplastic polymer, and S2 is the contact area between the support and the polymer.

In contrast, cases in which S1/S2 = <1 refer to situations in which the support is either flat plate or the internal walls of a wetted-wall column, and in these cases, although the quantity of residual polymer retained on the support is smaller, owing to the fact that the surface area of the support is smaller than that of the polymerization reactor of the present invention, the strength with which the residual polymer is retained is higher, meaning the thickness of the residual polymer resin film is larger, which causes a deterioration in the efficiency of the cleaning process. Moreover, if a large quantity of liquid solvent is caused to flow over the support, then the polymer tends to accumulate and generate aggregates on the support, further worsening the efficiency of the cleaning process.

Moreover, depending on the strength of the support provided inside the polymerization reactor, and the crystallinity of the polycondensation polymer produced using the polymerization reactor, there is a danger that the volumetric shrinkage associated with crystallization of the residual polymer may cause an irreversible deformation of the support, resulting in a change in the characteristics of the polymerization reactor. Furthermore, once the residual polymer has crystallized, absorption of the solvent vapor by the polymer is also inhibited. In the present invention, following completion of the polymerization and halting of the polymerization operation, the solvent vapor is preferably introduced into the polymerization reactor with the temperature inside the reactor retained at a level equal to, or higher than, the temperature at which the polycondensation polymer undergoes crystallization. The temperature inside the polymerization reactor is even more preferably equal to, or higher than, the melting point of the polycondensation polymer, but no higher than the decomposition temperature of the polycondensation polymer. Accordingly, when the solvent is introduced into the polymerization reactor, a method in which the solvent is heated to a temperature equal to, or higher than, the temperature at which the polycondensation polymer undergoes crystallization prior to introduction is preferred.

The distance the residual polymer and the like flows during the period of contact with the solvent vapor while flowing down along the surface of the support is preferably at least 0.5 m. If this fall distance is too short, then the dissolution and/or depolymerization may be inadequate, meaning the polymer can descend and fall from the end of the support in an unmodified high viscosity state, and then combine to form aggregates, thereby dramatically reducing the treatment efficiency. There are no particular restrictions on the fall distance, although in terms of enhancing the cleaning efficiency, the distance is preferably within a range from 0.5 to 50 m, even more preferably from 1 to 20 m, and most preferably from 2 to 15 m. This fall distance can be selected in accordance with factors such as the length of the support within the polymerization reactor, and the height of the liquid level within the lower portion of the polymerization reactor.
The solvents and molecular weight reducing agents used in cleaning the residual polymer and the like can be selected appropriately from those materials described above in section (C). Furthermore, in order to further shorten the cleaning time, cleaning agents such as primary or secondary amines, acetic anhydride, phosphate esters, and phosphite esters can also be used in combination if required.

Suitable methods of supplying these solvents and molecular weight reducing agents include (1) methods in which at least a portion of a solvent and/or a molecular weight reducing agent that has been used for sequentially cleaning facilities positioned upstream from the polymerization reactor, such as reactors other than a polymerization reactor and polymer piping, is introduced into a polymerization reactor together with the polymer flow through a polymerization reactor raw material supply port, (2) methods in which the solvent and/or molecular weight reducing agent is absorbed by, or incorporated into the polymer in advance, and this polymer mixture is then supplied to the polymerization reactor through the polymerization reactor raw material supply port, (3) methods in which the solvent and/or molecular weight reducing agent is supplied directly to the main body of the polymerization reactor, either in a liquid and/or a gaseous state, and (4) methods that employ a combination of these methods.

In those cases where the solvent and/or molecular weight reducing agent is supplied directly to the main body of the polymerization reactor, the supply can be conducted through the raw material supply port of the polymerization reactor, the polymer extraction port located in the bottom of the polymerization reactor, or a solvent supply port or the like positioned at a desired location in the polymerization reactor. The position of the solvent supply port may be within either the liquid phase region at the bottom of the polymerization reactor, or the gas phase region that sits above the liquid phase region at the bottom of the polymerization reactor. If introduction of the solvent and/or molecular weight reducing agent occurs within the gas phase region, then the supply port is preferably separated from the venting ports of the polymerization reactor.
The cleaning temperature can be set to an appropriate level by controlling the temperature of a heater or heating jacket disposed either within the walls of, or within the interior of, the polymerization reactor that encloses the support, or by providing a heater or heating medium inside the support and then controlling the temperature of this heater or medium.

The pressure inside the polymerization reactor during cleaning can be set to an appropriate level by connecting the polymerization reactor to either a pressurization device or a pressure reduction device.
The temperature and pressure during cleaning are preferably selected in accordance with the nature of the residual polymer, and the nature of the solvent and/or molecular weight reducing agent.

For example, the temperature is preferably set so that, under the treatment pressure being used, the atmospheric temperature inside the dissolver is either equal to, or higher than, the boiling point of at least one of the components of the solvent. By setting the temperature in this manner, even a small quantity of solvent can be used to generate an adequate quantity of solvent vapor inside the dissolver, enabling the cleaning to proceed with favorable efficiency. The solvent vapor is absorbed by the residual polymer and the like retained on the support, causing the residual polymer to swell, and also generates a low viscosity solution of the residual polymer and the like which flows down along the support and accumulates as a solution at the bottom of the polymerization reactor. However, a portion of the solvent returns to vapor form inside the polymerization reactor and dissolves more of the residual polymer and the like still retained on the support. The solvent and/or molecular weight reducing agent does not only act in vapor form, and a portion also condenses within the upper regions of the polymerization reactor, and then flows down along the support in liquid form.

On the other hand, in order to ensure efficient cleaning, the temperature is preferably equal to, or higher than, either the glass transition temperature of the residual polymer or the like undergoing cleaning, or the temperature at which the residual polymer undergoes crystallization. Moreover, the temperature is preferably set to a high value, but must be kept below the temperature at which the residual polymer or the like undergoes thermal degradation.
In order to ensure conditions suitable for generating a vapor of the solvent and/or molecular weight reducing agent, as well as conditions suited to the nature of the residual polymer undergoing cleaning treatment (namely, a temperature that is equal to, or higher than, the glass transition temperature or the polymer crystallization temperature, but no higher than the temperature at which thermal degradation of the polymer becomes significant), the pressure is preferably selected from amongst normal pressure, applied pressure, or reduced pressure in accordance with the properties of the solvent being used.

Furthermore, under applied pressure or reduced pressure conditions, one preferred method involves introducing an inert gas into the polymerization reactor that exerts no deleterious effects on the polymerization reactor cleaning treatment, so that oxygen dissolved within the residual polymer or the like and impurities generated during the cleaning can be removed from the polymerization reactor together with the inert gas. In order to suppress degradation of the residual polymer, thereby preventing contamination of the polymerization reactor, the oxygen concentration within the gas phase portion inside the polymerization reactor is preferably no more than 5% by volume.
In a surprising finding, investigations by the inventors of the present invention revealed that introduction of an inert gas into the polymerization reactor actually improves the fluidity of the melted residual polymer and the like flowing down the support, and particularly in those cases where treatment is conducted under reduced pressure, the residual polymer undergoes foaming, thereby dramatically increasing the surface area and significantly improving the renewal process of the residual polymer surface layer, which enables cleaning to be conducted in an extremely short period of time. The reasons for these findings are not entirely clear, although it is surmised that the changes in the interior and surface states of the residual polymer and the like are responsible for the dramatic increase in the cleaning speed.

The inert gas introduced into the system preferably has no deleterious effects on the resin such as coloration, transformation, or decomposition, and suitable examples include nitrogen, argon, helium, carbon dioxide, lower hydrocarbon gases, and mixtures thereof. Nitrogen, argon, helium, or carbon dioxide are preferred as the inert gas, and of these, in terms of ease of availability, nitrogen is particularly desirable.
The quantity of inert gas introduced in the present invention is preferably within a range from 0.05 to 100 mg per 1 g of the residual polymer within the polymerization reactor. By ensuring that the quantity of the inert gas is at least 0.05 mg per 1 g of the polymer, satisfactory foaming of the resin is achieved, and the treatment effects described above can be enhanced. On the other hand, restricting the inert gas quantity to no more than 100 mg facilitates pressure reduction. The quantity of the inert gas is even more preferably within a range from 0.1 to 50 mg, and most preferably from 0.2 to 10 mg, per 1 g of the polymer.

Suitable methods of introducing the inert gas include methods in which the gas is introduced directly into the polymerization reactor, methods in which the inert gas is absorbed or incorporated into the polymer in advance, and this absorbed and/or incorporated gas is then released from the polymer under reduced pressure and thus introduced into the polymerization reactor, and combinations of these methods. Here, the term "absorbed" refers to the case in which the inert gas is dissolved within the polymer and does not exist as gas bubbles, whereas the term "incorporated" means the gas exists as bubbles within the polymer. In those cases when the inert gas exists as gas bubbles, the size of these bubbles is preferably as small as possible, and the average gas bubble diameter is preferably no more than 5 mm, and even more preferably 2 mm or smaller.

Cleaning can be conducted by supplying the solvent and/or molecular weight reducing agent continuously to the polymerization reactor, and then continuously extracting the solution containing the residual polymer and/or the depolymerization products of the residual polymer, which accumulates at the bottom of the polymerization reactor having flowed down along the support, but can also be conducted by introducing a quantity of the solvent and/or molecular weight reducing agent that is small relative to the volume of the polymerization reactor, holding the solvent and/or molecular weight reducing agent within the polymerization reactor for a predetermined time to accomplish cleaning, and then extracting the solution that has accumulated at the bottom of the polymerization reactor. In the latter case, the supply of the solvent and/or molecular weight reducing agent, and the extraction of the solution that has accumulated at the bottom of the polymerization reactor are preferably repeated a plurality of times. According to a,cleaning method of the present invention, the quantity used of the solvent and/or molecular weight reducing agent need be only very small, meaning cleaning can be conducted at minimal cost. Moreover, in the method of the present invention, because the rate of the depolymerization reaction is very high, the type of depolymerization catalyst required in conventional cleaning methods is unnecessary.

The time required for cleaning according to the present invention refers to the time from the point when supply of the solvent and/or molecular weight reducing agent to the polymerization reactor is commenced, through until the point when extraction of the solution containing the residual polymer and/or the depolymerization products of the residual polymer from the polymerization reactor is complete, and this time is preferably within a range from 1 minute to 100 hours, even more preferably from 5 minutes to 20 hours, even more preferably from 10 minutes to 10 hours, and most preferably from 20 minutes to 5 hours.

### EXAMPLES

As follows is a description of the present invention based on a series of examples.

### [Example 1]

Using the reactor shown in Figure 1, a PET resin was dissolved, yielding a PET resin solution.
The PET resin was melted a temperature of 265°C, and using the feed pump (A) 1, was then discharged from the raw material supply port 2 and through the holes of block A of the perforated plate 3 at a rate of 3.0 g/minute per hole. At the same time, isophorone was supplied as the solvent, and using the feed pump (B) 1, was discharged from the raw material supply port 2 and through the holes of block B of the perforated plate 3 at a rate of 7.0 g/minute per hole.

These supplied materials were then caused to flow down along the support at an atmospheric temperature equal to the discharge temperature, while the PET resin dissolved in the solvent, and the resulting solution was then discharged from the dissolver 10 using the drainage pump 8.
The polymer solution was allowed to accumulate at the bottom of the dissolver, and by extracting the polymer solution at a rate that matched the supply rates of the PET resin and the solvent, continuous dissolution was achieved.
The perforated plate used a plate of thickness of 50 mm containing 14 holes of diameter 1 mm, wherein these holes were arranged in two parallel rows separated by 70 mm, with each straight row containing 7 holes at a spacing of 10 mm. The holes belonging to the block A and the holes belonging to the block B were aligned in an alternating arrangement. The supports were wires with a diameter of 2 mm and a length of 8 m, and one support was attached and suspended vertically from a point close to each hole, and wires of diameter 2 mm and length 100 mm were then attached orthogonally across the suspended wires with a spacing of 100 mm, thus generating a lattice-type structure. Stainless steel was used as the material for the supports. The polymer concentration of the thus obtained PET resin was 30% by weight, and no iundissolved residual PET resin was observed at the bottom of the dissolver.

### [Example 2]

Using the reactor shown in FIG 3, flakes of collected waste PET bottles were melted, and using the feed pump (A) 1, were then supplied from the raw material supply port 2 to the depolymerization reactor 10, and discharged through the holes of block A of the perforated plate 3, in a melted state at 255°C and at a rate of 7.0 g/minute per hole. At the same time, ethylene glycol was supplied as a molecular weight reducing agent, and using the feed pump (B) 1, was supplied from the raw material supply port 2 to the depolymerization reactor 10, and discharged through the holes of block B of the perforated plate 3 at a rate of 2.3 g/minute per hole.
These supplied materials were then caused to flow down along the supports at an atmospheric temperature equal to the discharge temperature, while depolymerization was conducted at a reduced pressure of 85,000 Pa, and the resulting reaction product accumulated in the bottom of the depolymerization reactor, and was discharged from the depolymerization reactor using the drainage pump 8 at a rate that matched the supply rate of the depolymerization raw materials (the melted polymer and the molecular weight reducing agent).

The perforated plate used a plate of thickness of 50 mm containing 14 holes of diameter 1 mm, wherein these holes were arranged in two parallel rows separated by 70 mm, with each straight row containing 7 holes at a spacing of 10 mm. The holes belonging to the block A and the holes belonging to the block B were aligned in an alternating arrangement. The supports were wires with a diameter of 2 mm and a length of 8 m, and one support was attached and suspended vertically from a point close to each hole, and wires of diameter 2 mm and length 100 mm were then attached orthogonally across the suspended wires with a spacing of 100 mm, thus generating a lattice-type structure. Stainless steel was used as the material for the supports.
The residence time within the depolymerization reactor was 15 minutes. The residence time was calculated as the volume of reactants within the depolymerization reactor divided by the supply rate. Although heavy foaming of the PET discharged from the perforated plate during polymerization, and contamination of the nozzle surface and/or the wall surfaces caused by such heavy foaming were minimal, the falling resin incorporated large quantities of foam, and exhibited a behavior of rapid flow down the supports. Furthermore, in this example, although depolymerization was conducted without the addition of a depolymerization catalyst such as sodium carbonate, depolymerization was able to be conducted efficiently and within a short period of time.

To the liquid recovered from the discharge port were added 0.5 parts of sodium carbonate as a transesterification reaction catalyst and 100 parts of MeOH, and a transesterification reaction was then conducted by stirring the liquid at a stirring speed of 100 rpm for one hour, at a liquid temperature of 75° C and under normal pressure conditions. The resulting mixture of DMT, EG, and MeOH was cooled to 40°C and filtered through a glass 3G-4 filter. The DMT recovered from the top of the filter was a white color, and the yield relative to the terephthalic acid component within the PET resin used as the depolymerization raw material was 97 mol%. This DMT was added to 45 parts of MeOH, washed by heating to 40°C under stirring, and then once again filtered through a glass filter. This washing process was repeated twice.

The DMT trapped on top of the filter was placed in a distillation reactor and subjected to reduced pressure distillation at a pressure of 6.65 kPa, and DMT was collected as the distillate. 40 parts of the distillation-purified DMT was placed in a separable flask with 75 parts of EG, and when the temperature was raised with constant stirring at 100 rpm, MeOH was generated at a temperature in the vicinity of 200° C confirming reaction initiation. An operation was then conducted in which the distilled MeOH was removed from the system using two separating columns, whereas the accompanying EG and DMT fractions were returned to the flask. This operation was repeatedly conducted until the temperature inside the flask reached a temperature of 220 to 250°C, which was taken as the reaction end point. When the composition of the resulting mixture was analyzed by gas chromatography, it was found that the DMT had been completely consumed by the reaction, and no reaction by-products were detected. A combination of this analysis and GPC confirmed a BHET quantity of 44% by weight. The remaining components each exhibited a sharp molecular weight distribution, and were all confirmed as being linear dimers through pentamers, and lower oligomers.

### [Comparative Example 1]

A conventional stirred tank-type PET resin depolymerization reactor was charged with 200 parts of EG and 50 parts of a PET resin, and the temperature was raised to 185°C under stirring at 100 rpm. Under these conditions, 4 hours were required to complete the depolymerization reaction.
To the thus obtained depolymerization product were added 0.5 parts of sodium carbonate as a transesterification reaction catalyst and 100 parts of MeOH, and a transesterification reaction was then conducted by stirring the liquid at a stirring speed of 100 rpm for one hour, at a liquid temperature of 75°C and under normal pressure conditions.
The resulting mixture of DMT, EG, and MeOH was cooled to 40°C and filtered through a glass 3G-4 filter. The hue of the DMT recovered from the top of the filter was darker than that observed in the example 2, and the yield relative to the terephthalic acid component within the PET resin used as the depolymerization raw material was 83 mol%.

### [Comparative Example 2]

With the exception of altering the raised temperature to 255°C, a depolymerization reaction was conducted in the same manner as the comparative example 1. When the liquid temperature exceeded 185°C, the PET resin fused and formed aggregates, and 1.5 hours were required to complete the depolymerization reaction.
To the thus obtained depolymerization product were added 0.5 parts of sodium carbonate as a transesterification reaction catalyst and 100 parts of MeOH, and a transesterification reaction was then conducted by stirring the liquid at a stirring speed of 100 rpm for one hour, at a liquid temperature of 75°C and under normal pressure conditions.
The resulting mixture of DMT, EG, and MeOH was cooled to 40°C and filtered through a glass 3G-4 filter. The hue of the DMT recovered from the top of the filter was darker than that observed in the example 2, and the yield relative to the terephthalic acid component within the PET resin used as the depolymerization raw material was 78 mol%.

### [Example 31]

Using the reactor shown in FIG 7, a PET prepolymer with a limiting viscosity [η] of 0.46 dl/g, a carboxyl group quantity at the polymer terminals of 32 meq/kg, and a crystalline melting point of 260°C was supplied from the raw material supply port 2 to the polymerization reactor 10 using the feed pump (A) 1, and was discharged through the holes of block A of the perforated plate 3, in a melted state at 265°C and at a rate of 10 g/minute per hole. At the same time, a prepolymer produced by copolymerizing 4 mol% of cyclohexanedimethanol with a PET with a limiting viscosity [η] of 0.28 dl/g, a carboxyl group quantity at the polymer terminals of 30 meq/kg, and a crystalline melting point of 240°C was supplied from the raw material supply port 2 to the polymerization reactor 10 using the feed pump (B) 1, and was discharged through the holes of block B of the perforated plate 3, in a melted state at 265°C and at a rate of 10 g/minute per hole.
These supplied materials were then caused to flow down along the supports at an atmospheric temperature equal to the discharge temperature, while polymerization was conducted at a reduced pressure of 65 Pa, and the resulting product was discharged from the polymerization reactor using the drainage pump 8.

The perforated plate used a plate of thickness of 50 mm containing 14 holes of diameter 1 mm, wherein these holes were arranged in two parallel rows separated by 70 mm, with each straight row containing 7 holes at a spacing of 10 mm. The holes belonging to the block A and the holes belonging to the block B were aligned in an alternating arrangement. The supports were wires with a diameter of 2 mm and a length of 8 m, and one support was attached and suspended vertically from a point close to each hole, and wires of diameter 2 mm and length 100 mm were then attached orthogonally across the suspended wires with a spacing of 100 mm, thus generating a lattice-type structure. Stainless steel was used as the material for the supports.
Each prepolymer was produced by adding 0.04% by weight of diantimony trioxide and a sufficient weight of trimethyl phosphate to yield a phosphorus atom weight proportion of 100 ppm. The residence time within the polymerization reactor was 70 minutes. The residence time was calculated as the volume of polymer within the polymerization reactor divided by the supply rate. Although heavy foaming of the prepolymer discharged from the perforated plate during polymerization, and contamination of the nozzle surface and/or the wall surfaces caused by such heavy foaming were minimal, the falling resin incorporated large quantities of foam, and exhibited a behavior in which foam balls were generated, which then tumbled down along the supports.

Following completion of the polymerization reaction, residual polycondensation polymer, polymerization intermediates, raw materials, and modified products thereof were adhered to the inside of the polymerization reactor.
Next, in order to clean the polymerization reactor, triethylene glycol was supplied as a molecular weight reducing agent from the raw material supply port 2 to the polymerization reactor 10 using the feed pump (B) 1, and was introduced through the holes of block B of the perforated plate 3 in a liquid volume that at normal temperature and pressure was equivalent to 1% by volume relative to the volume of the polymerization reactor 10.
The polycondensation polymer, polymerization intermediates, raw materials, and modified products thereof adhered to the inside of the polymerization reactor were brought into contact with trimethylene glycol vapor at an atmospheric temperature of 270°C and a reduced pressure of 80,000 Pa, and cleaned for a period of 30 minutes while flowing down the supports, and the resulting solution of depolymerization products was extracted from the bottom of the polymerization reactor using the drainage pump 8. When the polymerization reactor was then opened and inspected, the inside of the reactor was clean, and exhibited a metallic luster. Furthermore, the solution of the depolymerization products was uniform and of low viscosity, and was able to be extracted with ease.

### [Comparative Example 3]

With the exceptions of using a perforated plate 3 in which the 5 holes of a block A and the 5 holes of a block B were arranged in alternating circles, and installing pipes with an inner diameter of 15 cm and a length of 8 m as the supports, so that the prepolymer discharged from the holes flowed down the inner walls of the pipes, a polymerization was conducted in the same manner as the example 3. The polymer flow falling from the bottom end of the pipes was observed through the observation window 4, but did not contain a large quantity of foam. The product polymer exhibited color irregularities, and the polymerization degree was low.
Following completion of the polymerization reaction, residual polycondensation polymer, polymerization intermediates, raw materials, and modified products thereof were adhered to the inside of the polymerization reactor, and these residual polymers were also observed dripping gradually from the bottom ends of the pipes.

Next, in order to clean the polymerization reactor, triethylene glycol was supplied as a molecular weight reducing agent from the raw material supply port 2 to the polymerization reactor 10 using the feed pump (B) 1, and was introduced through the holes of block B of the perforated plate 3 in a liquid volume that at normal temperature and pressure was equivalent to 1% by volume relative to the volume of the polymerization reactor 10.
The polycondensation polymer, polymerization intermediates, raw materials, and modified products thereof adhered to the inside of the polymerization reactor were brought into contact with trimethylene glycol vapor at an atmospheric temperature of 270°C and a reduced pressure of 80,000 Pa, and cleaned for a period of 30 minutes while flowing down the supports, the resulting solution of depolymerization products was extracted from the bottom of the polymerization reactor using the drainage pump 8, and the polymerization reactor was then opened and inspected. The inner walls of the supports showed the remains of individual flows (streak-like remains of yellow-colored polymer), as well as small quantities of adhered residual polymer owing to the inadequate nature of the cleaning process. Polymer adhesion was also noticeable in the bottom portion of the polymerization reactor. Furthermore, the solution of the depolymerization products was not uniform, and was a mixture of a low viscosity portion and a high viscosity portion.
These differences in behavior are thought to show that in the comparative example 3, not only did the residual polymer flow down the inner wall surfaces of the pipes in individual flows, but the residual polymer also merged to form aggregates, thereby causing a marked reduction in the depolymerization reaction rate.

### INDUSTRIAL APPLICABILITY

A method of producing a solution of a thermoplastic polymer according to the present invention enables a large quantity of polymer to be dissolved efficiently, and can consequently be used favorably as a method of producing solutions of PET resins and the like. Moreover, a method of depolymerizing a polycondensation polymer according to the present invention enables a large amount of polycondensation polymer to be treated efficiently and low cost, and can consequently be used favorably as a method of recycling PET resins and the like.
Furthermore, a cleaning method according to the present invention enables a polymerization reactor that is capable of the low-cost production, by melt polycondensation, of high-quality polymers and molded products thereof to be cleaned efficiently and at low cost, and can consequently be used favorably as a method of cleaning polymerization reactors.

## Claims

1. A method of producing a solution of a thermoplastic polymer and/or a solution of a depolymerization product of a thermoplastic polymer, **characterised by** comprising supplying a thermoplastic polymer, in a melted state, from a raw material supply port to the interior of a reactor, discharging the thermoplastic polymer through the holes of a perforated plate, and then causing the polymer to make contact with a solvent vapor while allowing the polymer to flow down along the surface of a support disposed inside the reactor.

2. The method of producing a solution of a thermoplastic polymer and/or a solution of a depolymerization product of a thermoplastic polymer according to claim 1, **characterized in that** a relationship S1/S2 > 1 is satisfied where S1 is a surface area of the thermoplastic polymer flowing down along the support and S2 is a contact surface area between the support and the thermoplastic polymer.

3. The method of producing a solution of a thermoplastic polymer and/or a solution of a depolymerization product of a thermoplastic polymer according to claim 1 or 2, **characterized in that** a distance that the thermoplastic polymer flows down along the support in a vapor phase is 0.5 m or more.

4. The method of producing a solution of a thermoplastic polymer and/or a solution of a depolymerization product of a thermoplastic polymer according to any one of claims 1 to 3, **characterized in that** the thermoplastic polymer includes one or more polymers selected from the group consisting of polyester resins, polyamide resins, polycarbonate resins, polyolefin resins, polystyrene resins, acrylic-based resins, silicone-based resins, fluororesins, polyphenylene oxides, polyphenylene sulfides, polysulfones, cellulose-based resins, and chitosan-based resins.

5. The method of producing a solution of a depolymerization product of a thermoplastic polymer according to any one of claims 1 to 4, **characterized in that** at least one component contained within the solvent vapor functions as a molecular weight reducing agent for the thermoplastic polymer, and the thermoplastic polymer undergoes a depolymerization reaction while flowing down the support.

6. The method of producing a solution of a depolymerization product of a thermoplastic polymer according to claim 5, **characterized in that** the solvent vapor contains an alkylene glycol.

7. The method of recycling a thermoplastic polymer,**characterized in that** a compound obtained using a method of producing a solution of a thermoplastic polymer and/or a solution of a depolymerization product of a thermoplastic polymer according to any one of claims 1 to 6 is reused as a polymer raw material.

8. The method of cleaning a polymerization reactor in which a polymerization intermediate is supplied, in a melted state, from a raw material supply port to a melt polymerization reactor, and is then discharged through the holes of a perforated plate and subsequently polymerized to produce a polycondensation polymer while flowing down along the surface of support disposed inside the reactor, **characterized in that** residual polymers, polymerization intermediates, and modified products thereof left within the polymerization reactor are removed by being brought into contact with a solvent vapor while flowing down along the surface of the support.

9. The method of cleaning a polymerization reactor according to claim 8, **characterized in that** a relationship S1/S2 > 1 is satisfied where S 1 is a surface area of the polycondensation polymer flowing down along the support and S2 is a contact surface area between the support and the polycondensation polymer.

10. The method of cleaning a polymerization reactor according to claim 8 or 9, **characterized in that** following production of the polycondensation polymer, the solvent vapor is introduced into the reactor with the temperature inside the polymerization reactor maintained at a temperature equal to, or higher than, the temperature at which the polycondensation polymer undergoes crystallization.

11. The method of cleaning a polymerization reactor according to any one of claims 8 to 10, **characterized in that** a distance across which the residual polymers, polymerization intermediates, and modified products thereof left within the polymerization reactor flowing down along the support during contacting with the solvent vapor while flowing down along the surface of the support is at least 0.5 m.

12. The method of cleaning a polymerization reactor according to any one of claims 8 to 11, wherein at least one component contained within the solvent vapor functions as a molecular weight reducing agent for the residual polymers, polymerization intermediates, and modified products thereof left within the polymerization reactor, and these residues undergo a depolymerization reaction while flowing down along the support.

13. The method of cleaning a polymerization reactor according to any one of claims 8 to 12, wherein the solvent vapor includes an alkylene glycol that has been heated to a temperature within a range from 100 to 300°C.
